# EUROPEAN PATENT APPLICATION

(11) **EP 2 735 856 A1**
(43) Date of publication of application: **28.05.2014**
(21) Application number: 12814398.9
(22) Date of filing: 19.07.2012
(51) Int. Cl.: G01M 3/06, B01D 65/10, G01N 21/954

(54) **DEFECT INSPECTION SYSTEM AND DEFECT INSPECTION METHOD FOR POROUS HOLLOW FIBER MEMBRANES, POROUS HOLLOW FIBER MEMBRANE, AND METHOD FOR PRODUCING POROUS HOLLOW FIBER MEMBRANE**

(30) Priority: 19.07.2011 JP 2011157885
(71) Applicant: Mitsubishi Rayon Co., Ltd., Tokyo 100-8253 (JP)
(72) Inventor: HIRAOKA Kotaro, Otake-shi Hiroshima 739-0693 (JP); SUMI Toshinori, Otake-shi Hiroshima 739-0693 (JP); FUJIKI Hiroyuki, Otake-shi Hiroshima 739-0693 (JP)
(74) Representative: HOFFMANN EITLE
(86) International application number: PCT/JP2012/068305
(87) International publication number: WO 2013/012030

(57) **Abstract**

The present invention provides a defect inspection apparatus and a defect inspection method that allows easy and efficient inspection of a defect of a porous hollow fiber membrane. The defect inspection apparatus for a porous hollow fiber membrane of the present invention includes: a container storing a fluid; a passage member that is configured such that a hollow fiber membrane travel passage, which allows the porous hollow fiber membrane to pass therethrough continuously, is formed thereinside and the passage member being disposed in the fluid to thereby fill the passage with the fluid; a restriction means that restricts travel of the porous hollow fiber membrane such that the porous hollow fiber membrane passes through the fluid in the hollow fiber membrane travel passage of the passage member; a fluid suction means that flows the fluid in the hollow fiber membrane travel passage to thereby lower the pressure of the fluid in the hollow fiber membrane travel passage; and an air bubble detection means that detects an air bubble that is released into the fluid from a defect of the porous hollow fiber membrane. A defect inspection method for a porous hollow fiber membrane using the abovementioned defect inspection apparatus.

## Description

### TECHNICAL FIELD

The present invention relates to a defect inspection apparatus and a defect inspection method for a porous hollow fiber membrane, as well as a porous follow fiber membrane and a manufacturing method thereof.

The present application claims priority to Japanese Patent Application No. 2011-157885 filed on July 19, 2011, the entire contents of which are incorporated herein by reference.

### BACKGROUND ART

With the recent growing interest in environmental pollution and tighter regulations, water treatment using a filter membrane that is superior in separation characteristics and space saving characteristics has attracted attention. As the filter membrane for water treatment, a porous hollow fiber membrane with a hollow porous layer has been preferable used. Such a porous hollow fiber membrane cannot provide a sufficient effect in presence of a defect such as crack, pinhole, and the like, through which a substance to be removed passes. Given this, porous hollow fiber membranes are tested for a defect such as crack, pinhole, and the like during or after manufacture.

As a defect inspection apparatus for a porous hollow fiber membrane, Patent Document 1 discloses, for example, a defect inspection apparatus including: a container storing a fluid; a restriction means that restricts travel of the porous hollow fiber membrane so as to pass through the liquid stored in the container; a decompression means that decompresses the inside of the container by evacuating air from a gas phase of the container; and an air bubble detection means that detects an air bubble that is released into the fluid from a defect of the porous hollow fiber membrane. In the defect inspection using the defect inspection apparatus, by evacuating air from the gas phase in the highly hermetic container storing the fluid, pressure of the gas phase and pressure of the fluid in the container are lowered and air in the porous hollow fiber membrane is released from the defect into the fluid, generating an air bubble. By detecting the air bubble produced due to the defect in the porous hollow fiber membrane, the defect of the porous hollow fiber membrane can be detected indirectly.

Patent Document 1: Japanese Patent Application Publication No. 2007-218859

### DISCLOSURE OF THE INVENTION

### Problems to be Solved by the Invention

However, the defect inspection apparatus may have a problem of a container having a complex structure. In other words, an inlet and an outlet of the container for the porous hollow fiber membrane must be in an open state while avoiding contact with the porous hollow fiber membrane in order to prevent the porous hollow fiber membrane from being damaged due to contact with the container. Meanwhile, in order to sufficiently decompress the inside of the container, relatively high hermetic property is required and a complex structure such as a labyrinth seal is required for the inlet and the outlet.

In addition, in the defect inspection by the defect inspection apparatus, flow of gas into the container through the inlet and the outlet cannot be completely avoided and a volume of emission from the gas phase becomes high, leading to waste of energy.

The present invention is aimed at providing a defect inspection apparatus and a defect inspection method that allows easy and efficient inspection of a defect of a porous hollow fiber membrane. In addition, the present invention is aimed at providing a manufacturing method of a porous hollow fiber membrane using the defect inspection method, as well as a porous hollow fiber membrane manufactured by the manufacturing method.

### Means for Solving the Problems

A defect inspection method for a porous hollow fiber membrane of the present invention includes steps of: disposing, in a fluid, openings at both ends of a hollow fiber membrane travel passage, which allows the porous hollow fiber membrane to pass therethrough, of a passage member, which is configured such that the hollow fiber membrane travel passage penetrates thereinside, to thereby fill the passage with the fluid;
making the porous hollow fiber membrane to travel continuously through the fluid in the hollow fiber membrane travel passage;
lowering pressure of the fluid in the hollow fiber membrane travel passage by flowing the fluid in the hollow fiber membrane travel passage; and
detecting an air bubble produced in the fluid from a defect of the porous hollow fiber membrane.

In the defect inspection method for a porous hollow fiber membrane of the present invention, it is preferable to dispose, in the fluid, openings at both ends of the hollow fiber membrane travel passage of the passage member, which further includes a branch passage that is formed to branch off from the hollow fiber membrane travel passage and to communicate with a first wall surface, to thereby fill the passage with the fluid; and
to lower the pressure of the fluid in the hollow fiber membrane travel passage by flowing the fluid in the hollow fiber membrane travel passage through the branch passage.

In the defect inspection method for a porous hollow fiber membrane of the present invention, it is preferable that an enlarged space in which a width of the passage increases is provided at a part in which the branch passage branches off from the hollow fiber membrane travel passage of the passage member; and
the pressure of the fluid in the hollow fiber membrane travel passage is lowered by flowing the fluid in the hollow fiber membrane travel passage from the enlarged space through the branch passage.

In the defect inspection method for a porous hollow fiber membrane of the present invention, it is preferable that the air bubble is guided to an air bubble detection means by flowing the air bubble along with the fluid.

In the defect inspection method for a porous hollow fiber membrane of the present invention, it is preferable that the fluid that fills the passage is fed after removing a bubble and dissolved gas in the fluid.

In the defect inspection method for a porous hollow fiber membrane of the present invention, it is preferable that the air bubble is detected in the fluid that is suctioned from the hollow fiber membrane travel passage and flowed.

The defect inspection apparatus for a porous hollow fiber membrane of the present invention includes: a container storing a fluid;
a passage member that is configured such that a hollow fiber membrane travel passage, which allows the porous hollow fiber membrane to pass therethrough continuously, penetrates thereinside and that openings at both ends of the hollow fiber membrane travel passage are disposed in the fluid to thereby fill the passage with the fluid;
a restriction means that restricts travel of the porous hollow fiber membrane such that the porous hollow fiber membrane passes through the fluid in the hollow fiber membrane travel passage of the passage member;
a fluid suction means that flows the fluid in the hollow fiber membrane travel passage of the passage member to thereby lower the pressure of the fluid in the hollow fiber membrane travel passage; and
an air bubble detection means that detects an air bubble that is released into the fluid from a defect of the porous hollow fiber membrane.

In the defect inspection apparatus for a porous hollow fiber membrane of the present invention, it is preferable that: in the passage member, a branch passage is further formed to branch off from the hollow fiber membrane travel passage and to communicate with a first wall surface, and openings at both ends of the hollow fiber membrane travel passage are disposed in the fluid to thereby fill the passage with the fluid; and
the pressure of the fluid in the hollow fiber membrane travel passage is lowered by flowing the fluid in the hollow fiber membrane travel passage from the enlarged space through the branch passage.

In the defect inspection apparatus for a porous hollow fiber membrane of the present invention, it is preferable that: an enlarged space in which a width of the passage increases is provided at a part in which the branch passage branches off from the hollow fiber membrane travel passage of the passage member; and
the pressure of the fluid in the hollow fiber membrane travel passage is lowered by flowing the fluid in the hollow fiber membrane travel passage of the passage member from the enlarged space through the branch passage by means of the fluid suction means.

In the defect inspection apparatus for a porous hollow fiber membrane of the present invention, it is preferable that the air bubble is guided to an air bubble detection means along with the fluid flowing.

It is preferable that the air bubble detection means is disposed between the hollow fiber membrane travel passage and the fluid suction means.

It is preferable that the air bubble detection means includes a light emitting unit that emits detection light into the fluid and a light receiving unit that receives the detection light having passed through the fluid.

It is preferable that the light emitting unit and the light receiving unit are arranged to face each other.

It is preferable that the light emitting unit and the light receiving unit in the air bubble detection means are arranged such that tip portions thereof are positioned inside the fluid that is suctioned from the hollow fiber membrane travel passage and flows.

It is preferable that the defect inspection apparatus for a porous hollow fiber membrane of the present invention further includes a fluid inflow line through which the fluid flows into the container, in which a defoaming means that removes a bubble in the fluid inflowing is provided in the fluid inflow line.

It is preferable that a deaeration means that removes dissolved gas in the fluid inflowing is provided in the fluid inflow line.

It is preferable that the fluid inflow line includes a fluid feed line through which the fluid inflows from a fluid feed source to the container.

It is preferable that the fluid inflow line includes a fluid circulation line in which the fluid suctioned from the passage member flows into the container and is circulated.

A manufacturing method of a porous hollow fiber membrane of the present invention includes: a coagulation step of coagulating a membrane forming material liquid containing a hydrophobic polymer, a hydrophilic polymer, and a solvent by a coagulation liquid, to thereby forming a porous hollow fiber membrane precursor;
a cleaning step of cleaning the porous hollow fiber membrane precursor to thereby remove the solvent remaining in the porous hollow fiber membrane precursor;
a removing step of removing the hydrophilic polymer remaining in the porous hollow fiber membrane precursor to thereby obtain the porous hollow fiber membrane;
a drying step of drying the porous hollow fiber membrane; and
a defect inspection step of inspecting a defect of the porous hollow fiber membrane after the drying step by using the defect inspection method of the present invention.

A porous hollow fiber membrane of the present invention is a porous hollow fiber membrane manufactured by a manufacturing method of a porous hollow fiber membrane including: a coagulation step of coagulating a membrane forming material liquid containing a hydrophobic polymer, a hydrophilic polymer, and a solvent by a coagulation liquid, to thereby forming a porous hollow fiber membrane precursor;
a cleaning step of cleaning the porous hollow fiber membrane precursor to thereby remove the solvent remaining in the porous hollow fiber membrane precursor;
a removing step of removing the hydrophilic polymer remaining in the porous hollow fiber membrane precursor to thereby obtain the porous hollow fiber membrane;
a drying step of drying the porous hollow fiber membrane; and
a defect inspection step of inspecting a defect of the porous hollow fiber membrane after the drying step by using the defect inspection method of the present invention.

### Effects of the Invention

The defect inspection apparatus according to the present invention allows easy and efficient inspection of a defect of a porous hollow fiber membrane, not requiring a complex hermetic structure.

In addition, the defect inspection method according to the present invention allows easy and efficient inspection of a defect of a porous hollow fiber membrane.

Furthermore, the manufacturing method of the porous hollow fiber membrane according to the present invention can provide a defect free porous hollow fiber membrane easily and efficiently.

Moreover, the porous hollow fiber membrane according to the present invention is easily and efficiently tested for a defect.

### BRIEF DESCRIPTION OF THE DRAWINGS

FIG. 1 is a front schematic view illustrating an example of a defect inspection apparatus for a porous hollow fiber membrane of the present invention;
FIG. 2 is a perspective view of a passage member in the defect inspection apparatus for a porous hollow fiber membrane of FIG. 1;
FIG. 3 is a cross-sectional view taken along a line I-I' of the passage member of FIG. 2;
FIG. 4 is a cross-sectional view taken along a line II-II' of the passage member of FIG. 2;
FIG. 5 is a cross-sectional view of a passage member of another example in which an enlarging groove forming an enlarged space is formed on a reverse face of an upper lid, taken as in FIG. 4;
FIG. 6 is a cross-sectional view taken along a line III-III' of the passage member of FIG. 4;
FIG. 7 is a cross-sectional view taken along a line IV-IV' of the passage member of FIG. 4;
FIG. 8 is a cross-sectional view of a passage member of another example in the defect inspection apparatus for a porous hollow fiber membrane of the present invention, taken as in FIG. 7;
FIG. 9 is a cross-sectional view of the passage member of FIG. 8, taken as in FIG. 4;
FIG. 10 is a front schematic view illustrating another example of the defect inspection apparatus for a porous hollow fiber membrane of the present invention;
FIG. 11 is a front schematic view illustrating another example of the defect inspection apparatus for a porous hollow fiber membrane of the present invention;
FIG. 12 is a cross-sectional view of another example of the passage member in the defect inspection apparatus for a porous hollow fiber membrane of the present invention, taken as in FIG. 4;
FIG. 13 is a perspective view of another example of the passage member in the defect inspection apparatus for a porous hollow fiber membrane of the present invention;
FIG. 14 is a cross-sectional view taken along a line V-V' of the passage member of FIG. 13;
FIG. 15 is a front schematic view illustrating a configuration of apparatus used for defect inspection of the porous hollow fiber membrane of Example 1;
FIG. 16 shows an air bubble detection pattern by a photoelectric sensor amplifier of a defect free part of the porous hollow fiber membrane;
FIG. 17 shows an air bubble detection pattern by the photoelectric sensor amplifier of a part with a defect of the porous hollow fiber membrane; and
FIG. 18 shows a result of the air bubble detection by the photoelectric sensor amplifier, in the defect inspection of Example 1.

### PREFERRED MODE FOR CARRYING OUT THE INVENTION

### Defect Inspection Apparatus for Porous Hollow Fiber Membrane

The defect inspection apparatus for a porous hollow fiber membrane of the present invention is an apparatus for inspecting a defect of a porous hollow fiber membrane. An example of the defect inspection apparatus for a porous hollow fiber membrane of the present invention is described hereinafter in detail.

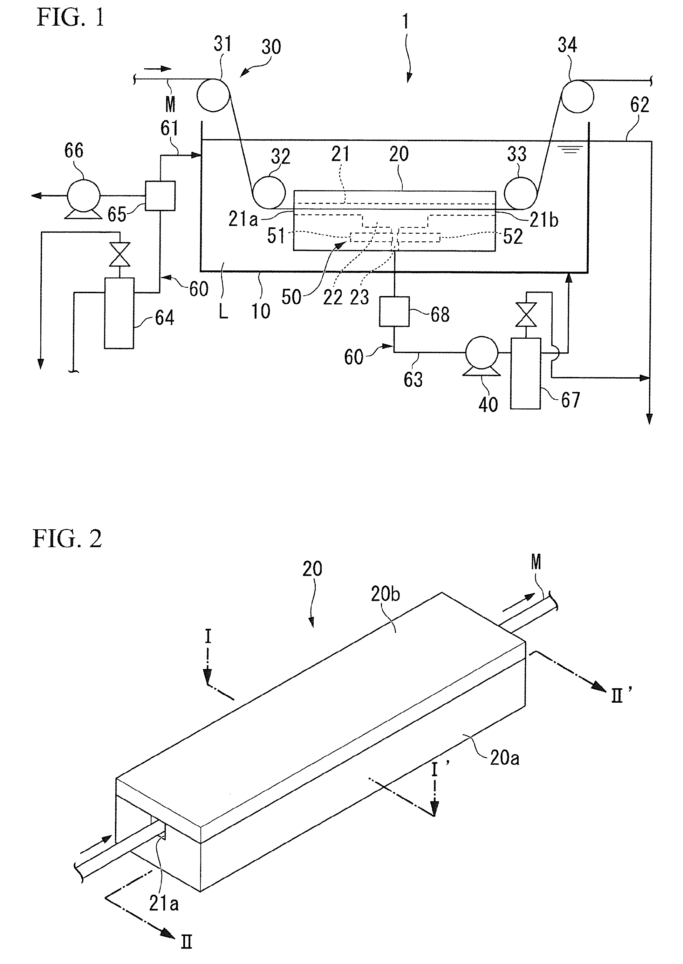

A defect inspection apparatus 1 for a porous hollow fiber membrane of the present invention (hereinafter referred to simply as "defect inspection apparatus 1") includes, as shown in FIGS. 1 to 4:
a container 10 storing a fluid L;
a passage member 20 having a hollow fiber membrane travel passage 21, which allows a porous hollow fiber membrane M to pass therethrough, that is formed to penetrate thereinside and a branch passage 23 that is formed to branch off from the hollow fiber membrane travel passage 21 and to communicate with a first wall surface, these passages being filled with the fluid L;
a restriction means 30 that restricts travel of the porous hollow fiber membrane M such that the porous hollow fiber membrane M passes through the hollow fiber membrane travel passage 21 of the passage member 20;
a fluid suction means 40 that flows the fluid L filling the hollow fiber membrane travel passage 21 of the passage member 20 to thereby lower the pressure of the fluid L in the hollow fiber membrane travel passage 21;
and an air bubble detection means 50 that detects an air bubble that is released into the fluid L from a defect in the porous hollow fiber membrane M.

The defect inspection apparatus 1 further includes a fluid inflow line 60 through which the fluid L flows into the container 10. The fluid inflow line 60 includes: a fluid feed line 61, a first end of which is connected to a fluid feed source (not illustrated) and a second end of which is connected to the container 10, through which the fluid inflows from the fluid feed source to the container; and a fluid circulation line 63, a first end of which is connected to the branch passage 23 of the passage member 20 and a second end of which is connected to the container 10, in which the fluid L suctioned from the branch passage 23 of the passage member 20 flows into the container 10 and is circulated.

The fluid suction means 40 is provided in the middle of the fluid circulation line 63 and can flow the fluid L in the hollow fiber membrane travel passage 21 via the branch passage 23 and the fluid circulation line 63.

The container 10 is a container that stores the fluid L. In this example, the passage member 20 is immersed in the fluid L stored in the container 10.

The material of the container 10 is not particularly limited as long as not being corrodible by moisture and the fluid L or erodible by the fluid L, and can be, for example, resin such as polyester, polyvinyl chloride, polyethylene, polyamide, polypropylene, and polyacetal; metal or alloy such as iron, aluminum, copper, stainless steel, nickel, and titanium; or a composite material thereof.

The shape and size of the container 10 is not particularly limited as long as being able to immerse the passage member 20 in the fluid L and to secure such a depth of fluid that, upon suctioning the fluid L in the container 10 through the openings 21a, 21b at both ends of the passage member 20, the fluid L does not form a vortex and suction air from the fluid level.

The container 10 is connected to the fluid supply source (not illustrated) via the fluid supply line 61. In the middle of the fluid supply line 61, a defoaming means 64 and a deaeration means 65 are provided. The fluid L is supplied from the fluid supply source to the container 10 via the fluid supply line 61. An air bubble in the fluid L supplied is removed by the defoaming means 64. A false detection due to an air bubble contained in the fluid L supplied can thus be suppressed, thereby improving reliability of detection of an air bubble released from a defect of the porous hollow fiber membrane M. Dissolved gas in the fluid L in the fluid supply line 61 is removed by the deaeration means 65. The reliability of detection of an air bubble released from a defect of the porous hollow fiber membrane M can thus be improved.

As the defoaming means 64 and the deaeration means 65, any means that can remove an air bubble or dissolved gas in the fluid L to be supplied to the container 10 can be used. As the defoaming means 64, for example, a means that can separate an air bubble and a fluid in the fluid L, such as a filter module using a separation membrane with filtration accuracy of approximately 0.1 um, can be exemplified. As the deaeration means 65, for example, a means that can deaerate the dissolved gas in the fluid L, such as a combination of a deaeration module using a porous hollow fiber membrane for gas separation and a decompression means 66, can be exemplified.

A fluid drainage opening for overflow is formed on the container 10, and the fluid L stored in the container 10 overflows via a fluid discharging line 62, to thereby maintain a fluid level of the fluid L in the container 10 constant.

In the defect inspection apparatus of the present invention, it is preferable to provide a defoaming means 67 in the middle of the fluid circulation line 63 as in this example. As a result, a foreign matter in the fluid L circulating in the container 10 and the dissolved gas deaerated from the fluid L and forming an air bubble in the passage member 20 and the fluid suction means 40 can be removed efficiently, to thereby prevent the false detection due to the air bubble contained in the circulating fluid L. The defoaming means 67 provided on the fluid circulation line 63 has a greater effect of improving reliability than the defoaming means 64 provided on the fluid supply line 61. In addition, in the defoaming means 67, by providing a drain at a position where the separated air bubbles accumulate and continuously draining an appropriate amount of the fluid L to the outside of the container 10, reduction in a fluid filtration area due to the air bubbles remaining in the defoaming means 67 can be prevented. As the defoaming means 67, the same means exemplified for the defoaming means 64 can be used.

Furthermore, a deaeration means can be provided on the fluid circulation line 63 in order to improve the reliability of air bubble detection.

As the fluid L, water, a fluid used as a reagent for a wet tension test such as methanol, ethanol, and formamide, and a mixture thereof with water can be exemplified. Since the surface tension affects the size of a detectable defect, a fluid of which accurate surface tension property is known is preferred; and water is particularly preferred (surface tension at 28°C: approximately 73.0 mN/m) from the viewpoint of handling and waste water treatment. In addition, the fluid L can be a fluid of which surface tension is controlled by adjusting temperature and a blending ratio of water and methanol. In addition, in a case of embedding the defect inspection apparatus in a manufacturing line of porous hollow fiber membranes in order to detect a defect continuously on the manufacturing line, a fluid used for cleaning of the porous hollow fiber membranes (for example, pure water) can be used as the fluid L. In other words, the container 10 can be a container that stores a cleaning solution in a cleaning apparatus for cleaning the porous hollow fiber membranes after spinning.

In a case in which a substance that reduces the surface tension of the fluid L leaks from the porous hollow fiber membrane during inspection and the surface tension of the fluid L is reduced, it is preferable that the defect inspection apparatus has a mechanism of monitoring the surface tension of the fluid L and controlling the feeding amount of water to the container 10, to thereby maintaining the surface tension of the fluid L constant.

As shown in FIGS. 1 to 4, in the passage member 20, a hollow fiber membrane travel passage 21, which allows the porous hollow fiber membrane M to pass therethrough, is formed to penetrate inside the passage member 20. In the hollow fiber membrane travel passage 21, the porous hollow fiber membrane M is entirely surrounded by a wall surface. In addition, in the passage member 20, a branch passage 23 that branches off from the hollow fiber membrane travel passage 21 and communicates with a lower wall surface of the passage member 20 is formed. In a central part of the hollow fiber membrane travel passage 21, an enlarged space 22 in which a width of the passage increases is provided, and the branch passage 23 branches off from the hollow fiber membrane travel passage 21 at the enlarged space 22. In this example, by immersing the passage member 20 in the fluid L stored in the container 10, the openings 21a, 21b at both ends of the hollow fiber membrane travel passage 21 are disposed inside the fluid L. As a result, the fluid L flows into the hollow fiber membrane travel passage 21 from the openings 21a, 21b at both ends thereof, and the entire hollow fiber membrane travel passage 21 including the enlarged space 22 and the inside of the branch passage 23 are filled with the fluid L.

The branch passage 23 is connected with the fluid suction means 40 via the fluid circulation line 63, and the fluid suction means 40 can suction and flow the fluid L in the hollow fiber membrane travel passage 21 from the enlarged space 22 via the branch passage 23. As a result, due to a flow pressure loss of the fluid L that flows between an outer peripheral part of the porous hollow fiber membrane M and the wall surface of the hollow fiber membrane travel passage 21 in the hollow fiber membrane travel passage 21, the pressure of the fluid L in the hollow fiber membrane travel passage 21 can be lowered. The pressure of the fluid L in the hollow fiber membrane travel passage 21 is the lowest at the enlarged space 22, a point of connection with the branch passage 23. As described above, in the defect inspection apparatus 1, the passage of the passage member 20 is filled with the fluid L, and the porous follow fiber membrane M passes continuously through the hollow fiber membrane travel passage 21 maintained at a decompressed state by flowing the fluid L thereinside from the enlarged space 22 toward the branch passage 23.

The passage member 20 of the present example, as shown in FIGS. 2 to 4, 6 and 7, is configured by covering: a groove that forms the hollow fiber membrane travel passage 21 with the enlarged space 22 in a center; and an upper portion of a passage member main body 20a in which the branch passage 23 is formed, with an upper lid 20b. The passage member main body 20a and the upper lid 20b are not required to have a special mechanism to adhere and fix to each other. Without such a special mechanism, the passage member main body 20a and the upper lid 20b can adhere and fix to each other, as the fluid L flows under suction by the fluid suction means 40 to thereby lower the pressure of the fluid L in the hollow fiber membrane travel passage 21 and the branch passage 23. By employing such a configuration, even in a case in which the porous hollow fiber membrane M clogs the hollow fiber membrane travel passage 21, the porous hollow fiber membrane M can be easily removed from the passage member main body 20a by opening the upper lid 20b.

However, the passage member main body 20a and the upper lid 20b can be provided with a mechanism to close. In a case in which the passage member 20 is configured by covering the groove that forms the hollow fiber membrane travel passage 21 and the upper portion of the passage member main body 20a in which the branch passage 23 is formed, with the upper lid 20b, a small amount of external air may be suctioned from an interface between the passage member main body 20a and the upper lid 20b into the fluid L, forming an air bubble that may lead to false detection of a defect. In order to prevent this problem, the following methods may be employed: (1) a method of securing a sufficient hermetic property of the interface between the passage member main body 20a and the upper lid 20b; and (2) a method of making a configuration in which the entire interface between the passage member main body 20a and the upper lid 20b is immersed in the fluid L to thereby make the fluid L be suctioned, not the external air, even if the hermetic property of the interface between the passage member main body 20a and the upper lid 20b is undermined. Among these, more preferred is the method (2) that is easy and reliable.

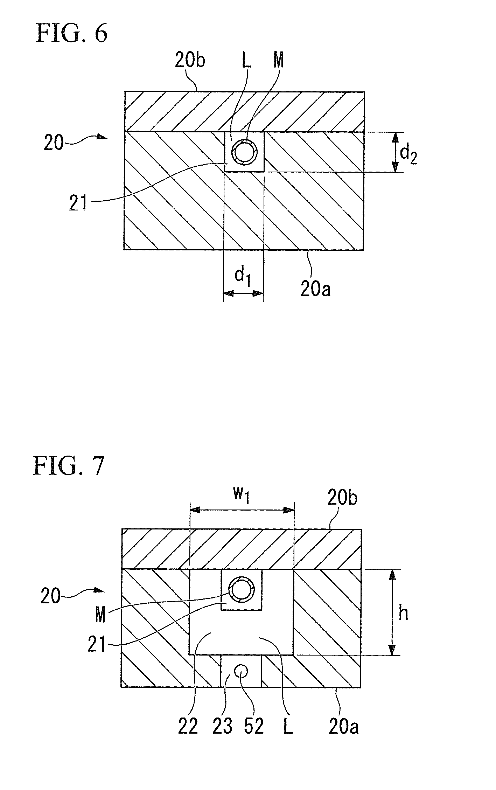

In a case in which the upper portion of the passage member main body 20a, in which the groove that forms the hollow fiber membrane travel passage 21 with the enlarged space 22 is provided, is formed by covering with the upper lid 20b, a cross-sectional shape of the hollow fiber membrane travel passage 21 vertical to a central axis is preferably rectangular as shown in FIG. 6, from the viewpoint of facilitating formation of the passage. The rectangular cross-sectional shape of the hollow fiber membrane travel passage 21 vertical to the central axis is more advantageous than a round cross-sectional shape, since, even if the porous hollow fiber membrane M comes into contact with the wall surface of the passage, contact area thereof would be smaller and damage to the membrane can be suppressed.

Furthermore, compared to a case in which a round passage is formed by forming a half-round groove on both sides of the interface between the passage member main body 20a and the upper lid 20b and then assembling, in a case of making the cross-sectional shape of the hollow fiber membrane travel passage 21 vertical to the central axis rectangular, and forming a side of the rectangle with a bottom part of the upper lid 20b, it is sufficient to provide a groove for forming the passage only on the passage member main body 20a side, and the interface with the upper lid 20b can be made flat. In such a configuration, the passage can be easily formed, and accurate alignment of the passage member main body 20a and the upper lid 20b is not required. In addition, since the porous hollow fiber membrane M can be fully stored in the groove provided on the passage member main body 20a upon placing the porous hollow fiber membrane M in the passage, there is no risk of the porous hollow fiber membrane M being stuck in the interface upon closing the upper lid 20b. In a case in which the cross-sectional shape of the hollow fiber membrane travel passage 21 vertical to the central axis is a triangle, the same effect as the rectangular cross-sectional shape can be provided by forming a side of the triangle with a bottom part of the upper lid 20b.

It should be noted that the cross-sectional shape of the hollow fiber membrane travel passage 21 vertical to the central axis is not limited to a rectangle and a triangle, and may also be a polygon such as a pentagon or more, a round shape, and the like.

A distance between the wall surface of the hollow fiber membrane travel passage 21 and the porous hollow fiber membrane M is preferably 5% to 40%, and more preferably 10% to 20%, of a diameter of the porous hollow fiber membrane M. The distance no smaller than the above-specified lower limit can suppress surface damage to the porous hollow fiber membrane M and increase in travel resistance of the porous hollow fiber membrane M due to contact with the wall surface of the hollow fiber membrane travel passage 21. The distance no greater than the above-specified upper limit can suppress the increase in travel resistance of the porous hollow fiber membrane M in the hollow fiber membrane travel passage 21 due to vibration and bend of the porous hollow fiber membrane M due to flow of the fluid L, and can suppress the amount of the fluid L to be suctioned by the fluid suction means 40 for lowering the pressure of the fluid L in the hollow fiber membrane travel passage 21, through which the porous hollow fiber membrane M passes, to a predetermined value.

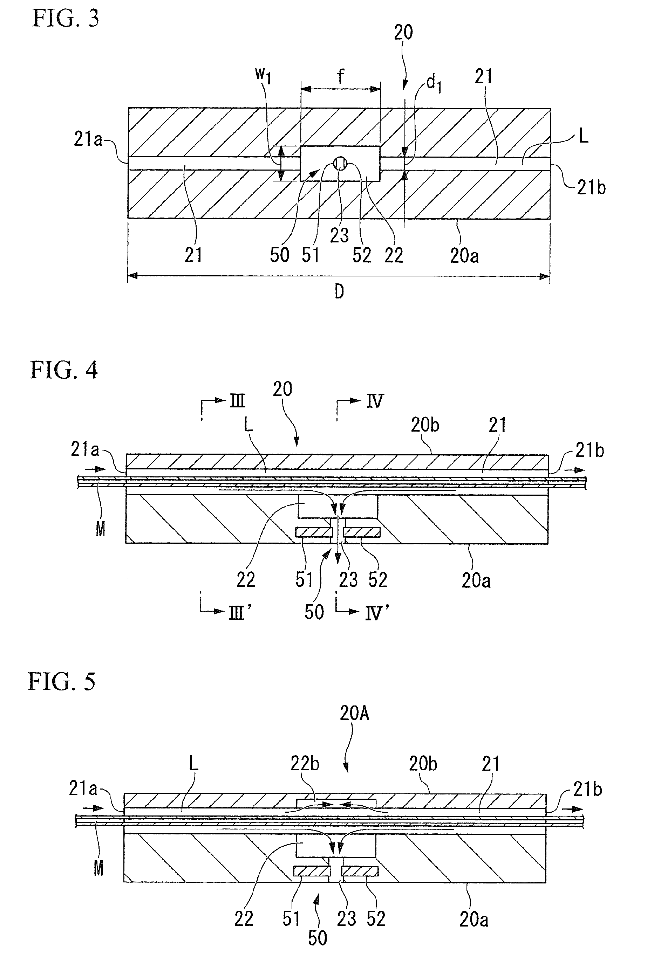

A width d₁ (see FIGS. 3 and 6) of parts of the hollow fiber membrane travel passage 21 except for the enlarged space 22 is preferably 110% to 180%, and more preferably 120% to 140%, of a diameter of the porous hollow fiber membrane M. A height d₂ (see FIG. 6) of parts of the hollow fiber membrane travel passage 21 except for the enlarged space 22 is, similarly, preferably 110% to 180%, and more preferably 120% to 140%, of a diameter of the porous hollow fiber membrane M.

It is preferable that an inner wall surface of the hollow fiber membrane travel passage 21 is finished smoothly in order to prevent damage to the surface of the porous hollow fiber membrane M even when the porous hollow fiber membrane M comes into contact therewith. Furthermore, it is further preferable that the inner wall surface of the hollow fiber membrane travel passage 21 is treated by fluorinate coating, diamondlike carbon coating and the like, that lowers frictional resistance with the porous hollow fiber membrane M.

It is preferable that the cross-sectional shape of the hollow fiber membrane travel passage 21 vertical to the central axis is a square in a case of a rectangle, and an equilateral triangle in a case of a triangle.

In a case in which the cross-sectional shape of the hollow fiber membrane travel passage 21 vertical to the central axis is an equilateral polygon, a flow state of the fluid L flowing around the porous hollow fiber membrane M in the hollow fiber membrane travel passage 21 becomes axisymmetrical with respect to a central axis of the porous hollow fiber membrane M, stabilizing the travel state of the porous hollow fiber membrane M in the hollow fiber membrane travel passage 21.

A length D (see FIG. 3) of the hollow fiber membrane travel passage 21 is preferably 100 mm to 2000 mm, and more preferable 300 mm to 1000 mm, although the preferred length depends on an inspection speed (travel speed of the porous hollow fiber membrane M). The length D no smaller than the above-specified lower limit can facilitate detection of an air bubble released from a defect of the porous hollow fiber membrane M. The length D no greater than the above-specified upper limit can suppress the increase in the travel resistance of the porous hollow fiber membrane M and grow in size of the defect inspection apparatus 1.

It is preferable that distances between the opening 21b and the branch passage 23 and between the opening 21a and the branch passage 23 are identical, and structure of the passages from the opening 21b to the branch passage 23 and from the opening 21a to the branch passage 23 is symmetrical with respect to the branch passage 23. In such a structure, upon suctioning and flowing the fluid L in the hollow fiber membrane travel passage 21 by the fluid suctioning means 40 via the branch passage 23, pressure distribution of the fluid L from the opening 21b to the branch passage 23 and from the opening 21a to the branch passage 23 is symmetrical with respect to the branch passage 23. Given this, in the hollow fiber membrane travel passage 21 and the enlarged space 22, a position at which an air bubble is released from a defect in the porous hollow fiber membrane M and a position at which an air bubble is no longer released are symmetrical with respect to the branch passage 23. As a result, a position of a defect in the porous hollow fiber membrane M can be precisely identified based on a time at which an air bubble is first detected and a time at which an air bubble is not longer detected that are measured by the air bubble detection means 50 that detects an air bubble released from a defect in the travelling porous hollow fiber membrane M into the fluid L, as well as the travel speed of the porous hollow fiber membrane M.

A width w₁ (see FIG. 3) and a height h (see FIG. 7) of the enlarged space 22 are greater than the width d₁ and the height d₂, respectively, of parts of the hollow fiber membrane travel passage 21 except for the enlarged space.

In the hollow fiber membrane travel passage 21, it is preferable that connection portions between the enlarged space 22 and other parts are finished smoothly without a sharp part. By eliminating the sharp part, generation of a vortex and cavitation therefrom during flow of the fluid L can be prevented, and generation of a decompression bubble and vibration of the porous hollow fiber membrane M can thus be suppressed. For the similar reason, it is also preferable that a connection portion between the branch passage 23 and the enlarged space 22 is finished smoothly.

The fluid L having flowed into the hollow fiber membrane travel passage 21 through the openings 21a, 21b flows around the porous hollow fiber membrane M toward the branch passage 23 and flows into the enlarged space 22 from the circumference of the porous hollow fiber membrane M. Here, in the enlarged space 22, the fluid L having flowed more toward the branch passage 23 than the porous hollow fiber membrane M travels in the enlarged space 22 toward the branch passage 23 without interference. On the other hand, in the enlarged space 22, the fluid L having flowed more toward the opposite side of the branch passage 23 across the porous hollow fiber membrane M is forced to travel through a gap between the porous hollow fiber membrane M and a wall surface of the enlarged space 22. When a flow pressure loss occurs during travel of the fluid L through the gap between the porous hollow fiber membrane M and a wall surface of the enlarged space 22, the pressure of the fluid L on the opposite side to the branch passage 23 across the porous hollow fiber membrane M increases. The greater increase in pressure bends the porous hollow fiber membrane M toward the branch passage 23 in the enlarged space 22 more heavily, leading to increase in travel resistance of the porous hollow fiber membrane M and surface damage of the porous hollow fiber membrane M at the connection portion between the hollow fiber membrane travel passage 21 and the enlarged space 22.

In order to prevent such a phenomenon, the following methods may be employed: a method of making the width w₁ (see FIG. 3) of the enlarged space 22 greater than the width d₁ of the parts of the hollow fiber membrane travel passage 21 except for the enlarged space 22; and a method of making a length f (see FIG. 3) of the enlarged space 22 greater.

It is preferable that the width w₁ of the enlarged space 22 is at least twice larger than the width d₁ of the parts of the hollow fiber membrane travel passage 21 except for the enlarged space. In such a configuration, the cross-sectional area of the gap between the porous hollow fiber membrane M and the enlarged space 22 increases, and the flow pressure loss during flow of the fluid L can be suppressed substantially.

The length f of the enlarged space 22 is preferably twice to ten times, and more preferably four to eight times, greater than the diameter of the porous hollow fiber membrane M. If the length f of the enlarged space 22 is no smaller than the lower limit, the cross-sectional area of the gap between the porous hollow fiber membrane M and the enlarged space 22 increases, and the flow pressure loss is suppressed. If the length f of the enlarged space 22 is no greater than the upper limit, a support interval of the porous hollow fiber membrane M by the restriction means 30 becomes smaller and bend of the porous hollow fiber membrane M toward the branch passage 23 can be suppressed.

If the width w₁ of the enlarged space 22 is no smaller than the above-specified lower limit and the length f of the enlarged space 22 is no greater than the above-specified upper limit, the flow pressure loss during flow of the fluid L in the gap between the porous hollow fiber membrane M and the enlarged space 22 can be easily suppressed, and the heavy bend of the porous hollow fiber membrane M toward the branch passage 23 in the enlarged space 22 can be easily prevented, allowing maintenance of the desired travel state of the porous hollow fiber membrane M in the hollow fiber membrane travel passage 21 and in the enlarged space 22.

The defect inspection apparatus of the present invention can include a passage member 20A illustrated in FIG. 5 instead of the passage member 20. The passage member 20A is identical to the passage member 20 except for that: a groove forming the hollow fiber membrane travel passage 21 is provided on the passage member main body 20a; and an enlarged groove 22b, which has the same planar shape as the groove of the enlarged space 22 provided on the passage member main body 20a and a depth of approximately twice the diameter of the porous hollow fiber membrane M, is provided on the interface of the upper lid 20b at a position corresponding to the enlarged space 22. By increasing a spatial volume of an opposite side to the branch passage 23 in the enlarged space 22 as described above, the velocity distribution of the fluid L that flows in the gap between the porous hollow fiber membrane M and the enlarged space 22 becomes more homogeneous and the flow pressure loss can be suppressed.

The pressure of the fluid L in the hollow fiber membrane travel passage 21 lowers as approaching the innermost part of the passage from the both openings 21a, 21b, and is the lowest at a position where the passage of the enlarged space 22 branches in the hollow fiber membrane travel passage 21, in other words an entry point of the branch passage 23 where the fluid L is suctioned.

By increasing the width w₁ and height h of the enlarged space 22, the flow pressure loss of the fluid L in the enlarged space 22 can be reduced, to thereby reduce the pressure change in a direction of the length f and provide a higher degree of decompression of the inside of the enlarged space 22. As a result, upon detection of an air bubble released from the defect of the porous hollow fiber membrane M, even a defect that requires a high degree of decompression to release an air bubble releases an air bubble sufficiently, thus extending an air bubble detection time and improving resolution of defect detection.

The height h of the enlarged space 22 is preferably twice to ten times of the width w₁ of the enlarged space 22. If the height h is no smaller than the lower limit, the pressure change in the direction of the length f in the enlarged space 22 can be further reduced. If the height h is no greater than the upper limit, increase in substitution time of the fluid L due to increase in volume of the enlarged space 22, as well as lowering of precision and speed of the air bubble detection due to an enlarged retention space, can be easily suppressed.

The cross-sectional shape of the branch passage 23 vertical to the central axis is preferably a round shape which can make the cross-sectional velocity distribution of the fluid L flowing in the branch passage 23 rotationally symmetric with respect to the central axis of the branch passage 23 and thereby stabilizing a flow position of an air bubble in the fluid L. It should be noted that the cross-sectional shape of the branch passage 23 vertical to the central axis is not limited to a round shape, and may also be a rectangle and the like.

The material of the passage member 20 is not particularly limited as long as not being corrodible or erodible by the fluid L, and can be, for example, resin such as polyester, polyvinyl chloride, polyethylene, polyamide, polypropylene, and polyacetal; metal or alloy such as iron, aluminum, copper, nickel, and titanium; or a composite material thereof.

The restriction means 30 is composed of four guide rollers 31 to 34. Travel of the porous hollow fiber membrane M is restricted by the guide rollers 31 to 34. As shown in FIG. 1, the porous hollow fiber membrane M is continuously introduced into the fluid L stored in the container 10 by the guide rollers 31 to 34, then introduced through the opening 21a into the hollow fiber membrane travel passage 21 of the passage member 20, then passes through the fluid L in the hollow fiber membrane travel passage 21, and exits from the opening 21b to the outside of the fluid L.

As the guide rollers 31 to 34, guide rollers generally used for manufacture of a porous hollow fiber membrane can be used.

The fluid suction means 40 flows the fluid L in the hollow fiber membrane travel passage 21 to thereby lower the pressure of the fluid L in the hollow fiber membrane travel passage 21. In this example, the fluid suction means 40 is connected to the branch passage 23 via the fluid circulation line 63. The fluid suction means 40 can suction and flow the fluid L from the enlarged space 22 of the hollow fiber membrane travel passage 21, via the branch passage 23 and the fluid circulation line 63. The fluid L suctioned from the passage member 20 is returned to the container 10 via the fluid circulation line 63. It should be noted that the defect inspection apparatus of the present invention is not limited to the configuration and can employ a configuration in which a fluid suctioned from a passage member by a liquid suction means is disposed of.

The fluid suction means 40 can be any means that can suction and flow the fluid L in the enlarged space 22 of the hollow fiber membrane travel passage 21, for example a gear pump, a cascade pump and the like. A sealless pump such as magnet coupling type pump is especially preferable for that a rotational shaft of the pump is shielded from external air and there is no risk of external air leaking into the fluid L in a highly decompressed state through a sealed part and flowing into the container 10 in a form of a fine air bubble in the fluid L. It is preferable that the fluid suction means 40 is controllable by an inverter. It is further preferable to provide a pressure gauge 68 on an upstream side of the fluid suction means 40 in the fluid circulation line 63 to configure such that an output from the pressure gauge 68 is fed back to the inverter to thereby automatically control a rotational speed of the pump of the fluid suction means 40, as shown in FIG. 1. In a case of using the pressure gauge, it is preferable to provide the pressure gauge as close as possible to the hollow fiber membrane travel passage and to monitor the pressure.

The air bubble detection means 50 detects an air bubble that is released into the fluid L from the porous hollow fiber membrane M. By detecting the air bubble released from the defect in the porous hollow fiber membrane M, the defect of the porous hollow fiber membrane M can be detected indirectly.

As the air bubble detection means 50 can be any means that can detect an air bubble, for example a photoelectric sensor, an ultrasonic air bubble detector, and an image processing device. Among these, a photoelectric sensor is preferable.

As the photoelectric sensor, fiber sensors manufactured by OMRON CORPORATION (model name: E3X-DA11AN-S) and by KEYENCE CORPORATION (model name: FS-N11N (FS-N10 series)) can be exemplified.

In the present invention, it is preferable that the air bubble detection means is disposed between the hollow fiber membrane travel passage and the fluid suction means. More specifically, in this example, it is preferable that the air bubble detection means is disposed in a part of the branch passage 23 between an open end on the enlarged space 22 side and an open end on the outer wall surface side, or in the middle of a path from the open end on the outer wall surface side of the branch passage 23 to the fluid suction means. The air bubble detection means can be provided in the hollow fiber membrane travel passage to detect an air bubble released from the porous hollow fiber membrane; however, in the hollow fiber membrane travel passage, a position where an air bubble is released from the defect of the porous hollow fiber membrane is variable depending on a size of the defect and a degree of decompression of the fluid. In addition, especially in a case in which the porous hollow fiber membrane travels at high speed for improving productivity, an air bubble travels along the porous hollow fiber membrane until the air bubble leaves the porous hollow fiber membrane. In such a case, in order to detect an air bubble generated from the porous hollow fiber membrane in the hollow fiber membrane travel passage in a stable manner, it is necessary to provide a plurality of air bubble detection means along the passage axis of the hollow fiber membrane travel passage. On the contrary, an air bubble released from a defect of the porous hollow fiber membrane having passed through the hollow fiber membrane travel passage travels along the fluid flowing under suction, and passes through the part of the branch passage 23 between the open end on the enlarged space 22 side and the open end on the outer wall surface side, and the path from the open end on the outer wall surface side of the branch passage 23 to the fluid suction means. As a result, as described above, by providing the air bubble detection means at these parts, an air bubble generated by air in an inner space of the porous hollow fiber membrane M and released from the defect can be detected in a stable manner even with only one air bubble detection means.

In the example illustrated in FIGS. 4, 5, and FIGS. 7 to 9 (described later), the air bubble detection means 50 is provided in the branch passage 23 of the passage member 20. An air bubble released from a defect of the porous hollow fiber membrane M flows into the branch passage 23 along with the fluid L flowing in the hollow fiber membrane travel passage 21 from the openings 21a, 21b toward the branch passage 23, and is detected by the air bubble detection means.

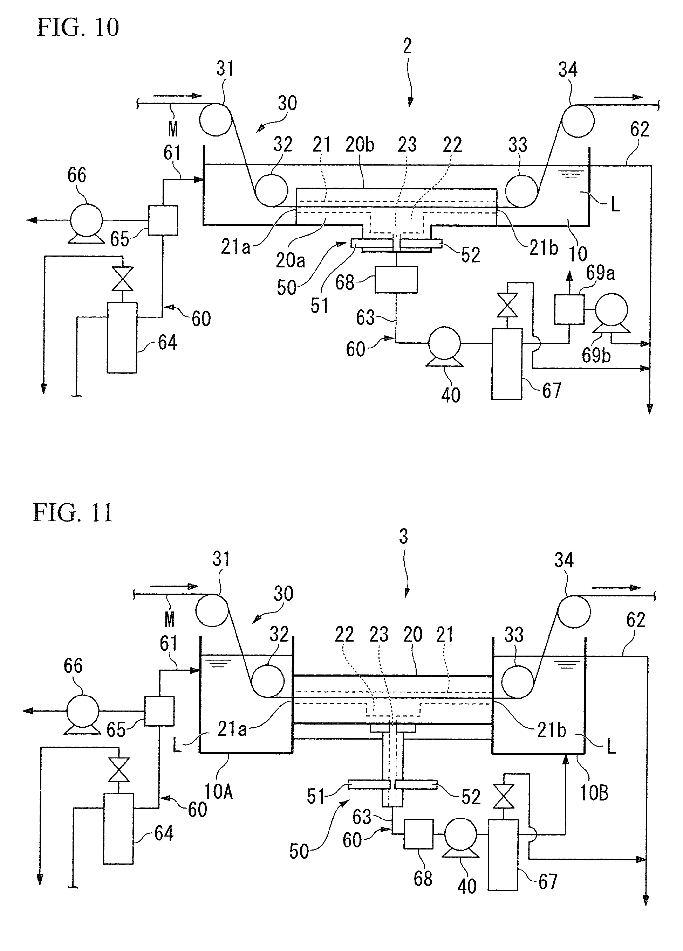

Alternatively, in the present invention, it is also preferable to provide the air bubble detection means in the fluid circulation line 63, between the branch passage 23 and the fluid suction means 40, as illustrated in FIG. 11. Yet alternatively, it is also preferable to provide the air bubble detection means in the extended space 22, between the porous hollow fiber membrane M and an entry point of the branch passage 23, on an extended line of the central axis of the branch passage 23.

The air bubble detection means 50 includes a light emitting unit 51 that emits detection light into the fluid L and a light receiving unit 52 that receives the detection light from the fluid L. It is preferable that the light emitting unit 51 and the light receiving unit 52 in the air bubble detection means 50 are arranged such that tip portions thereof are positioned inside the fluid L that is suctioned from the hollow fiber membrane travel passage 21 and flows. In the present example, it is preferable that the light emitting unit 51 and the light receiving unit 52 are arranged to protrude from the wall surface of the branch passage 23 toward the inner cavity of the branch passage 23. This can facilitate prevention of false detection of dirt or air bubbles on the wall surface of the branch passage 23.

However, in such a case that a part of the passage member 20 around the branch passage 23 and the inner wall surface of the fluid circulation line 63 are treated against deposition of dirt or air bubbles, the tip portions of the light emitting unit and the light receiving unit can be arranged flush with the wall surface, not protruding into the fluid L being suctioned and flowing. In a case in which the part of the passage member 20 around the branch passage 23 and the fluid circulation line 63 are formed of a light transmissive resin material or the like, the light emitting unit and the light receiving unit can be provided outside of the branch passage 23 and the fluid circulation line 63.

It is preferable that the light emitting unit 51 and the light receiving unit 52 of the air bubble detection means 50 are arranged to face each other, in order that the light receiving unit 52 may receive the light emitted from the light emitting unit 51 efficiently to thereby detect a light intensity change upon passage of an air bubble. The air bubble detection means 50 can detect an air bubble based on the light intensity change, which is caused in such a way that, upon passage of the air bubble between the light emitting unit 51 and the light receiving unit 52 in the branch passage 23, the detection light incident from the light emitting unit 51 into the fluid L is reflected and/or scattered by the air bubble, thereby reducing the intensity of the detection light reaching the light receiving unit 52.

Alternatively, in the present invention, the air bubble detection means 50 can be arranged such that respective optical axes of the light emitting unit 51 and the light receiving unit 52 intersect in the fluid L in the branch passage 23. With such an arrangement of the light emitting unit 51 and the light receiving unit 52, an air bubble can be detected based on the light intensity change, which is caused in such a way that: in the absence of an air bubble, the light from the light emitting unit 51 does not reach the light receiving unit 52; and in the presence of an air bubble passing, the light emitted from the light emitting unit 51 is reflected or scattered by the air bubble and reflected light or scattered light reaches the light receiving unit 52. Such a method of detecting an air bubble by receiving reflected light or scattered light from the air bubble is more easily influenced by ambient light compared to the method of detecting an air bubble based on light interception by the air bubble. In addition, the intensity of light received by the light receiving unit 52 is reduced by air bubbles overlapping in directions of optical axes of the light emitting unit 51 and the light receiving unit 52 in the fluid L. Therefore, in the method of detecting an air bubble by receiving reflected light or scattered light from the air bubble, it is preferable to employ a means for reducing influence of ambient light by ambient light shielding, or a means for increasing intensity of the detection light emitted from the light emitting unit 51.

In addition, it is preferable that the light emitting unit 51 and the light receiving unit 52 are arranged such that the optical axes of the light emitting unit 51 and the light receiving unit 52 pass through a part where the velocity of the flowing fluid in the branch passage 23 is the maximum. Since an air bubble passing through the branch passage 23 is likely to pass through the part where the velocity of the flowing fluid is the maximum, the air bubble can be detected in a more stable manner by configuring the optical axes of the light emitting unit 51 and the light receiving unit 52 pass through this part. More specifically, a configuration in which the optical axes of the light emitting unit 51 and the light receiving unit 52 intersect with the central axis of the branch passage 23.

In this case, the optical axes of the light emitting unit 51 and the light receiving unit 52 can be either orthogonal or oblique to the passage axis of the branch passage 23.

In the defect inspection apparatus 1, by immersing the passage member 20 in the fluid L stored in the container, the fluid L flows from the openings 21a, 21b of the passage member 20 into the hollow fiber membrane travel passage 21 and the branch passage 23 to fill these passages. The fluid L in the hollow fiber membrane travel passage 21 flows under suction by the fluid suction means 40 via the fluid circulation line 63, from the enlarged space 22 to the branch passage 23, and the pressure thereof is lowered due to flow pressure loss. In this state, by making the porous hollow fiber membrane M travel through the fluid L in the hollow fiber membrane travel passage 21, air in the porous hollow fiber membrane M is released (suctioned) from a defect, to thereby form an air bubble. By detecting the air bubble by the air bubble detection unit 50, the defect in the porous hollow fiber membrane M can be detected. Since the defect inspection apparatus of the present invention can guide an air bubble released from a defect of a porous hollow fiber membrane to the air bubble detection means along with the flowing fluid, all air bubbles can be detected.

The defect inspection apparatus for a porous hollow fiber membrane of the present invention can be employed for, for example, detection of defect in a porous hollow fiber membrane in the course of manufacture. The defect inspection apparatus for a porous hollow fiber membrane of the present invention can also be employed for detection of defect in a porous hollow fiber membrane after manufacture, by making the porous layer of the porous hollow fiber membrane in a uniformly moist state and filling the hollow portion with air. The defect inspection apparatus for a porous hollow fiber membrane of the present invention can also be employed for detection of defect in a porous hollow fiber membrane after manufacture even if the porous hollow fiber membrane has a hollow reinforcing support body in the porous layer, by making the porous layer as well as the reinforcing support body in a uniformly moist state and filling the hollow portion with air.

As a configuration of employing the defect inspection apparatus for a porous hollow fiber membrane of the present invention for detection of defect in a porous hollow fiber membrane in the course of manufacture, a configuration of arranging, in order: a spinning device that spins the porous hollow fiber membrane; a cleaning device that cleans the porous hollow fiber membrane; the defect inspection apparatus for a porous hollow fiber membrane of the present invention; a drying device that dries the porous hollow fiber membrane with hot air or the like; and a winding device that winds the porous hollow fiber membrane around a bobbin or the like, and detecting a defect in a manufacturing line of the porous hollow fiber membrane can be exemplified. Such a configuration is preferable for that air released from a defect during the detection inspection can be easily supplied to the hollow portion of the porous hollow fiber membrane, from a film surface dried by the drying device.

The conventional defect inspection apparatus disclosed in Patent Document 1 requires a complex hermetic structure in the inlet and outlet for the porous hollow fiber membrane in order to secure high hermetic properties for decompressing the inside of a container. In addition, in the defect inspection apparatus, flow of air into the container through the inlet and the outlet for the porous hollow fiber membrane cannot completely be avoided and a volume of emission from the gas phase tends to become high.

On the other hand, in the defect inspection apparatus for a porous hollow fiber membrane of the present invention, by flowing a fluid in a hollow fiber membrane travel passage in a state in which the passage member is immersed in the fluid and openings of both ends of the hollow fiber membrane travel passage are positioned in the fluid, the pressure of the fluid in the hollow fiber membrane travel passage is lowered. As described above, in the defect inspection apparatus for a porous hollow fiber membrane of the present invention, flow of air into the hollow fiber membrane travel passage is prevented by positioning the openings at both ends of the hollow fiber membrane travel passage. It is thus possible to prevent increase in suction volume of the fluid suction means due to inflow of air, while not requiring a complex hermetic structure in the container for storing fluid or in the passage member. In addition, the defect inspection apparatus for a porous hollow fiber membrane of the present invention can detect small defect easily, since a high degree of decompression of the fluid is possible with a smaller suction amount compared to a case of evacuating air from the gas phase. As described above, by employing the defect inspection apparatus for a porous hollow fiber membrane of the present invention, easy and efficient inspection of a defect of a porous hollow fiber membrane is possible.

In addition, in the defect inspection apparatus for a porous hollow fiber membrane of the present invention, the fluid flows in the hollow fiber membrane travel passage and in the branch passage, preventing sticking of an air bubble to the wall surface of the passage, whereby the air bubble released from a defect in the porous hollow fiber membrane, and therefore the defect of the porous hollow fiber membrane, can be detected in an efficient and stable manner.

It should be noted that the defect inspection apparatus for a porous hollow fiber membrane of the present invention is not limited to the above described defect inspection apparatus 1.

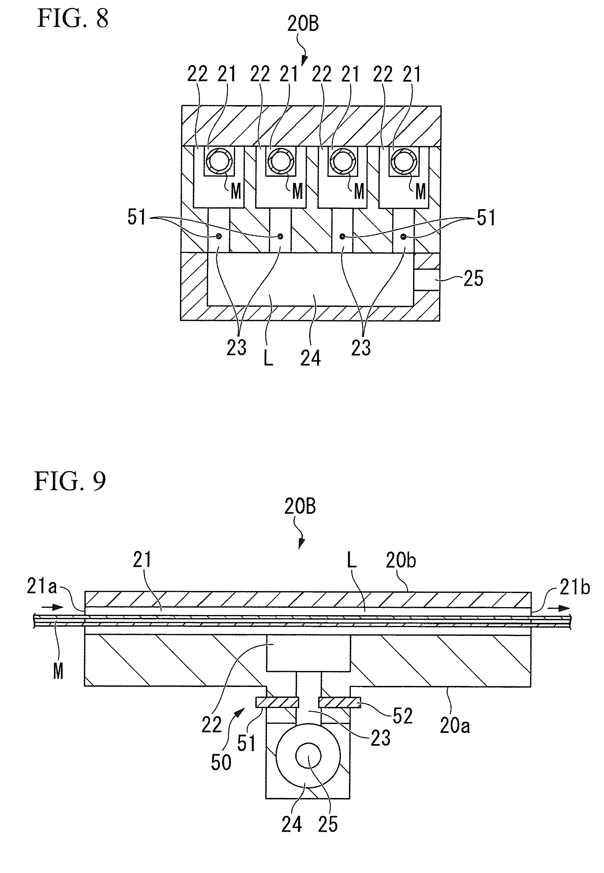

More specifically, the number of the hollow fiber membrane travel passage is not limited to one. For example, the defect inspection apparatus for a porous hollow fiber membrane of the present invention can include a passage member 20B illustrated in FIGS. 8 and 9. Inside of the passage member 20B, provided are: four hollow fiber membrane travel passages 21 respectively with enlarged spaces 22 in the central parts thereof, the hollow fiber membrane travel passages allowing the porous hollow fiber membrane M to pass therethrough in a state of being filled with the fluid L; four branch passages 23 branching respectively from the hollow fiber membrane travel passages 21 at the enlarged spaces 22; a junction part 24 where these branch passages 23 join with each other; and an outlet passage 25 from which the fluid L in the junction part 24 is discharged. In the defect inspection apparatus having the passage member 20B, the fluid L in the hollow fiber membrane travel passage 21 of each of the passage member 20B flows under suction by the fluid suction means from each of the enlarged space 22 via the branch passage 23, the junction part 24, and the outlet passage 25, to thereby decompress the fluid L in each of the hollow fiber membrane travel passages 21. By using such a defect inspection apparatus, four porous hollow fiber membranes M can be simultaneously inspected for defects. In this case, since air bubbles generated from defects of the porous hollow fiber membranes M respectively travelling in the hollow fiber membrane travel passages 21 are to be detected separately, it is preferable to provide the air bubble detection means at each of the four branch passages 23 or the four enlarged spaces 22.

The defect inspection apparatus for a porous hollow fiber membrane of the present invention is not limited to a configuration in which the passage member 20 is entirely immersed in the fluid, as long as openings at both ends of the hollow fiber membrane travel passage are disposed in the fluid and the passage is filled with the fluid. For example, the defect inspection apparatus for a porous hollow fiber membrane of the present invention can also be a defect inspection apparatus 2 for a porous hollow fiber membrane (hereinafter referred to simply as "defect inspection apparatus 2") exemplified in FIG. 10. Components of the defect inspection apparatus 2 identical to those of the defect inspection apparatus 1 are denoted by the same reference numerals and descriptions thereof are omitted.

In the defect inspection apparatus 2, a part of the bottom surface of the container 10 that stores the liquid L is constituted of the passage member 20. The air bubble detection means 50 in the defect inspection apparatus 2 is disposed such that the tip end thereof does not protrude into the fluid L flowing in the branch passage 23 of the passage member 20. In addition, in the defect inspection apparatus 2, a deaeration means 69a that removes dissolved oxygen in the circulating fluid L is provided on a downstream side of the defoaming means 67 in the fluid circulation line 63. This improves the reliability of detection of an air bubble. As the deaeration means 69a, for example, a means that can deaerate the dissolved gas in the fluid L, such as a combination of a deaeration module using a porous hollow fiber membrane for gas separation and a decompression means 69b, can be exemplified.

Alternatively, the defect inspection apparatus for a porous hollow fiber membrane of the present invention can also be a defect inspection apparatus 3 for a porous hollow fiber membrane (hereinafter referred to simply as "defect inspection apparatus 3") exemplified in FIG. 11. Components of the defect inspection apparatus 3 identical to those of the defect inspection apparatus 1 are denoted by the same reference numerals and descriptions thereof are omitted.

The defect inspection apparatus 3 is an apparatus configured similar to the defect inspection apparatus 1 except for that: two containers 10A, 10B storing the fluid L are provided; both ends of the passage member 20 are connected to side faces of the containers 10A, 10B; the opening 21a of the hollow fiber membrane travel passage 21 is positioned in the fluid L stored in the container 10A; and the opening 21b is positioned in the fluid L stored in the container 10B.

Yet alternatively, the defect inspection apparatus for a porous hollow fiber membrane of the present invention can also be a defect inspection apparatus having a passage member in which a hollow fiber membrane travel passage without an enlarged space and a branch passage are formed. The defect inspection apparatus for a porous hollow fiber membrane of the present invention can also be a defect inspection apparatus in which an enlarged space in which only a width of the passage increases is provided at a part in which the branch passage branches off from the hollow fiber membrane travel passage.

Yet alternatively, the defect inspection apparatus for a porous hollow fiber membrane of the present invention can also be a defect inspection apparatus in which the branch passage that branches off from the hollow fiber membrane travel passage includes a passage member that communicates with a wall surface of the passage member other than the lower wall surface.

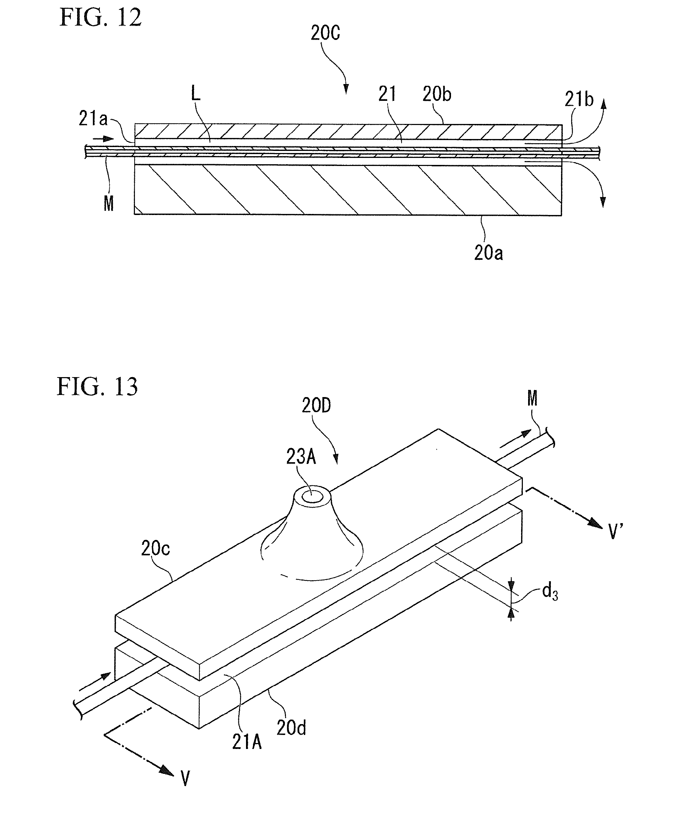

Furthermore, the defect inspection apparatus for a porous hollow fiber membrane of the present invention can also be a defect inspection apparatus in which the passage member does not have the branch passage that branches off from the hollow fiber membrane travel passage. More specifically, for example, the present invention can be a defect inspection apparatus with a passage member 20C that does not have the branch passage that branches off from the hollow fiber membrane travel passage 21 as exemplified in FIG. 12. The passage member 20C is identical to the passage member 20 except for not having the branch passage 23 and not having the enlarged space 22 provided in the hollow fiber membrane travel passage 21.

In a case of the defect inspection apparatus having the passage member 20C, it is preferable that the pressure of the fluid L is lowered by suctioning and flowing the fluid L from the opening 21b side of the hollow fiber membrane travel passage 21 in the passage member 20C, in other words the pressure of the fluid L in the hollow fiber membrane travel passage 21 is lowered by suctioning the fluid L such that a flow direction of the fluid L and a travel direction of the porous hollow fiber membrane M are the same. Alternatively, the pressure of the fluid L can be lowered by suctioning and flowing the fluid L from the opening 21a side of the hollow fiber membrane travel passage 21 in the passage member 20C, such that a flow direction of the fluid L and a travel direction of the porous hollow fiber membrane M are opposite. In a case of the defect inspection apparatus having the passage member 20C, it is also preferable that the air bubble detection means is arranged as close as possible to the opening 21b in the hollow fiber membrane travel passage 21, in other words on a downstream side in the travel direction of the porous hollow fiber membrane M. This allows more stable detection of an air bubble.

The defect inspection apparatus for a porous hollow fiber membrane of the present invention can also be a defect inspection apparatus with the passage member having a hollow fiber membrane travel passage in which the traveling porous hollow fiber membrane is not entirely surrounded with wall surfaces, as long as the pressure of the fluid can be lowered by suctioning the fluid filling the hollow fiber membrane travel passage of the passage member. For example, the defect inspection apparatus for a porous hollow fiber membrane of the present invention can be a defect inspection apparatus with the passage member in which two plate-like members are fixed parallel to each other with a fixed gap therebetween, the gap functioning as the hollow fiber membrane travel passage. Alternatively, the defect inspection apparatus for a porous hollow fiber membrane of the present invention can be: a defect inspection apparatus with the above described gap as the hollow fiber membrane travel passage, as well as the passage member with a branch passage that branches off from the hollow fiber membrane travel passage; and yet alternatively, a defect inspection apparatus with a passage member provided with an enlarged space, in which a width and height of the hollow fiber membrane travel passage increase, at a position where the branch passage branches off from the hollow fiber membrane travel passage.

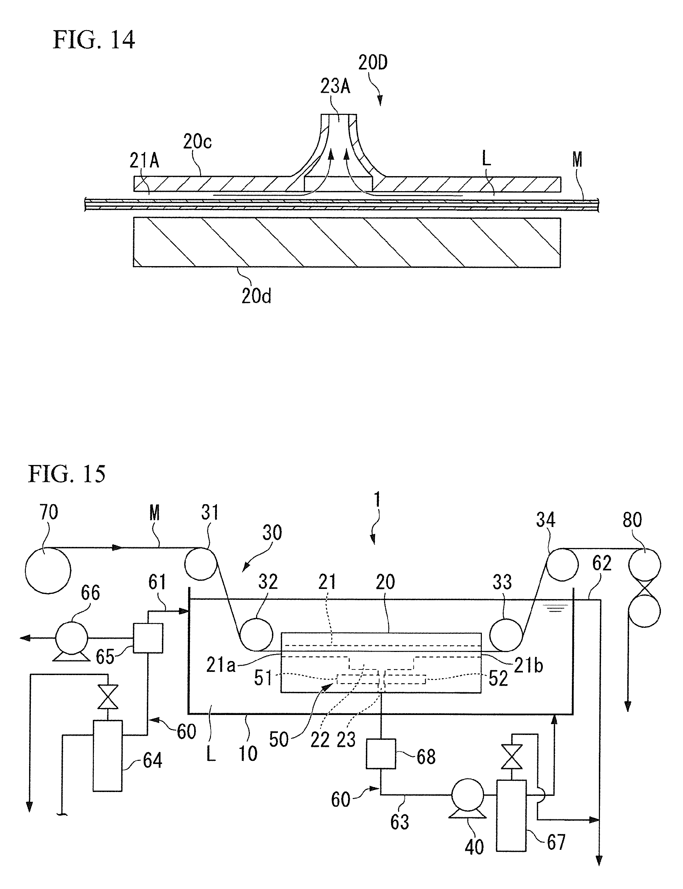

More specifically, the defect inspection apparatus for a porous hollow fiber membrane of the present invention can be a defect inspection apparatus including a passage member 20D illustrated in FIGS. 13 and 14.

In the passage member 20D, an elongated rectangular plate-like upper plate member 20c and an elongated rectangular plate-like lower plate member 20d are fixed parallel to each other with a fixed gap therebetween, the gap functioning as the hollow fiber membrane travel passage 21A that allows the porous hollow fiber membrane M to travel therethrough. The hollow fiber membrane travel passage 21A is configured such that the porous hollow fiber membrane M travels along a longitudinal direction of the gap between the upper plate member 20c and the lower plate member 20d. In a central part of the upper plate member 20c, the branch passage 23A for suctioning the fluid L in the hollow fiber membrane travel passage 21A toward the upper wall surface side of the upper plate member 20c is formed to branch off from the hollow fiber membrane travel passage 21A between the upper plate member 20c and the lower plate member 20d.

In the defect inspection apparatus having the passage member 20D, by suctioning the fluid L in a hollow fiber membrane travel passage 21A via the branch passage 23A in a state in which the passage member 20D is immersed in the fluid L and filling the hollow fiber membrane travel passage 21A with the fluid L, the pressure of the fluid L in the hollow fiber membrane travel passage 21A is lowered. And then, by making the porous hollow fiber membrane M travel in the fluid L in the hollow fiber membrane travel passage 21A and detecting an air bubble released from the porous hollow fiber membrane M by means of the air bubble detection means, a defect in the porous hollow fiber membrane M is detected.

Also in a case of the defect inspection apparatus having the passage member 20D, it is preferable that the air bubble detection means is disposed between the hollow fiber membrane travel passage and the fluid suction means. More specifically, in this example, it is preferable that the air bubble detection means is disposed in a part of the branch passage 23A between an open end on the hollow fiber membrane travel passage 21A side and an open end on the upper wall surface side, or in the middle of a path from the open end on the upper wall surface side of the branch passage 23A to the fluid suction means.

A distance (height) d3 (see FIG. 13) of the gap as the hollow fiber membrane travel passage 21A in the passage member 20D is preferably 110% to 180%, and more preferably 120% to 140%, of a diameter of the porous hollow fiber membrane M.

A preferable range of a length of the hollow fiber membrane travel passage 21A in the passage member 20D is the same as a preferable range of a length D of the hollow fiber membrane travel passage 21 in the passage member 20.

Furthermore, the defect inspection apparatus for a porous hollow fiber membrane of the present invention can be either: a defect inspection apparatus with a fluid inflow line having only one of the fluid feed line and the fluid circulation line; or a defect inspection apparatus without a fluid inflow line.

The defect inspection apparatus for a porous hollow fiber membrane of the present invention can also be configured by combining different examples of the above described embodiments as appropriate.

### Defect Inspection Method for Porous Hollow Fiber Membrane

As an example of the defect inspection method for a porous hollow fiber membrane of the present invention, a defect inspection method using the above described defect inspection apparatus 1 is explained hereinafter.

The porous hollow fiber membrane M, which is inspected for a defect, is not limited in terms of material, fractionation characteristics, etc., and can be any membrane that can be used as a filter membrane. As a material of the porous hollow fiber membrane M, polyethylene, polysulfone, polyvinylidene fluoride, cellulose and the like can be exemplified. The size of the porous hollow fiber membrane M is not limited either. A membrane of approximately 0.5 to 5 mm in outside diameter, approximately 0.3 to 4.9 mm in inside diameter, and approximately 0.05 to 0.5 um in fractionation characteristics can be exemplified.

The passage member 20 is immersed in the fluid L stored in the container 10. As a result, the fluid L flows from the openings 21a, 21b of the passage member 20 into the hollow fiber membrane travel passage 21 with the enlarged space 22 and the branch passage 23, to thereby fill these passages. The porous hollow fiber membrane M travels continuously through the hollow fiber membrane travel passage 21 filled with the fluid L. The travel speed of the porous hollow fiber membrane M can be set as appropriate.

In addition, the fluid suction means 40 suctions and flows the fluid L in the hollow fiber membrane travel passage 21 from the enlarged space 22 via the branch passage 23 and the fluid circulation line 63, to thereby lower the pressure of the fluid L in the hollow fiber membrane travel passage 21 by flow pressure loss. The pressure of the fluid L in the hollow fiber membrane travel passage 21 is lowered at least to a pressure lower than the internal pressure of the porous hollow fiber membrane M. This can allow an air bubble to be released from a defect in the porous hollow fiber membrane M in the hollow fiber membrane travel passage 21. The greater degree of decompression of the fluid L in the hollow fiber membrane travel passage 21, in other words the lower pressure of the fluid L applied to the porous hollow fiber membrane M, allows detection of smaller defect in the porous hollow fiber membrane M. As an air bubble released from a defect of the porous hollow fiber membrane M is guided to the air bubble detection means along with the flowing fluid L, all defects can be detected.

When an air bubble is generated by filling a first face side of the membrane with air or the like and filling a second face side of the membrane with a decompressed fluid in a state in which fine pores in a porous hollow fiber membrane are sufficiently moistened with appropriate fluid, the pressure of the fluid upon generation of a first air bubble is proportional to the surface tension of the fluid and inversely proportional to the diameter of the fine pores.

The degree of decompression of the fluid L in the hollow fiber membrane travel passage 21 can be selected as appropriate according to the surface tension of fluid used, and the size of defects in the porous hollow fiber membrane M. For example, in detection of defects of the same size, by reducing the surface tension of the fluid L to half, the necessary degree of decompression is also reduced to half.

In a case of the fluid L composed mainly of pure water, the pressure inside the enlarged space 22 is preferably at least -90 kPa and more preferably at least -80 kPa. If the pressure of the abovementioned fluid L is lower than the above specified lower limit, gas dissolved in the fluid L may appear in the fluid L as a fine bubble and a large bubble may be generated by flash boiling. If such bubbles are detected by the air bubble detection means 50, such bubbles may not be discriminated from an air bubble from a defect, and may cause false detection of a defect.

The pressure of the fluid L in the hollow fiber membrane travel passage 21 can be controlled by an amount of the fluid L from the enlarged space 22 via the branch passage 23.

Since the pressure of the fluid L in the hollow fiber membrane travel passage 21 is lower than the pressure inside the porous hollow fiber membrane M, if the porous hollow fiber membrane M travelling in the hollow fiber membrane travel passage 21 has a defect, the air inside the porous hollow fiber membrane M is released into the fluid L as an air bubble. The air bubble released into the fluid L flows toward the enlarged space 22 and travels along with the fluid L being suctioned via the branch passage 23 and the fluid circulation line 63. The air bubble in the flowing fluid L is detected at the branch passage 23 by the air bubble detection means 50. By detecting the air bubble released into the fluid L in the hollow fiber membrane travel passage 21, the defect of the porous hollow fiber membrane M can be detected.

The defect inspection method using the conventional defect inspection apparatus disclosed in Patent Document 1, as described above, requires a complex hermetic structure in the inlet and outlet for the porous hollow fiber membrane in order to secure high hermetic properties for decompressing the inside of a container. In addition, in the defect inspection method, flow of air into the container through the inlet and the outlet for the porous hollow fiber membrane cannot completely be avoided and a volume of emission from the gas phase tends to become high.

On the other hand, in the defect inspection method for a porous hollow fiber membrane of the present invention, by flowing a fluid in the hollow fiber membrane travel passage in a state in which openings of both ends of the hollow fiber membrane travel passage are positioned in the fluid and the passages are filled with the fluid, the pressure of the fluid in the hollow fiber membrane travel passage is lowered. As described above, in the defect inspection method for a porous hollow fiber membrane of the present invention, flow of air into the hollow fiber membrane travel passage is prevented by positioning the openings at both ends of the hollow fiber membrane travel passage. In the defect inspection method for a porous hollow fiber membrane of the present invention, it is thus possible to prevent increase in suction volume of the fluid suction means due to inflow of air, while not requiring a complex hermetic structure in the container for storing fluid or in the passage member. In addition, the defect inspection method for a porous hollow fiber membrane of the present invention can detect a small defect easily, since a high degree of decompression of the fluid is possible compared to a case of evacuating air from the gas phase. As described above, by the defect inspection method for a porous hollow fiber membrane of the present invention, easy and efficient inspection of a defect of a porous hollow fiber membrane is possible.

In addition, in the defect inspection method for a porous hollow fiber membrane of the present invention, the fluid flows in the hollow fiber membrane travel passage, preventing sticking of an air bubble to the wall surface of the passage, whereby all air bubbles released from a defect in the porous hollow fiber membrane can be guided to the air bubble detection means. By thus detecting the air bubble released (suctioned) from the defect in the porous hollow fiber membrane in a stable manner, the defect of the porous hollow fiber membrane can be detected.

It is preferable that a part of the porous hollow fiber membrane where a defect is detected is marked after that the porous hollow fiber membrane has exited from the defect inspection apparatus. Marking can be made by identifying a position of a defect by taking into consideration: a time at which an air bubble is first detected; a time at which an air bubble is not longer detected; and the travel speed of the porous hollow fiber membrane M, in the measurement by the air bubble detection means. This makes it easier to repair or cut off the part of the porous hollow fiber membrane with a defect.

The defect inspection method for a porous hollow fiber membrane of the present invention can be performed either in a manufacturing line of a porous hollow fiber membrane or to a porous hollow fiber membrane after manufacture.

The defect inspection method according to the present invention described above allows easy and efficient inspection of a defect of a porous hollow fiber membrane.

It should be noted that the defect inspection method for a porous hollow fiber membrane of the present invention is not limited to a method using the above described defect inspection apparatus 1. For example, the defect inspection method for a porous hollow fiber membrane of the present invention can also be a method using a passage member without the branch passage.

Alternatively, the defect inspection method for a porous hollow fiber membrane of the present invention can be a method using a defect inspection apparatus of various configurations other than that of the above described defect inspection method 1, such as: a defect inspection apparatus with the above described passage member 20A; a defect inspection apparatus with the passage member 20B; a defect inspection apparatus with the passage member 20C; a defect inspection apparatus with the passage member 20D; the defect inspection apparatus 2 or 3; or the like.

### Manufacturing Method of Porous Hollow Fiber Membrane

The manufacturing method of a porous hollow fiber membrane of the present invention includes a coagulation step, a cleaning step, a removing step, a drying step, and a defect inspection step the as described below.

Coagulation step: a step of coagulating a membrane forming material liquid containing a hydrophobic polymer, a hydrophilic polymer, and a solvent by a coagulation liquid, to thereby forming a porous hollow fiber membrane precursor.

Cleaning step: a step of cleaning the porous hollow fiber membrane precursor to thereby remove the solvent remaining in the porous hollow fiber membrane precursor.

Removing step: a step of removing the hydrophilic polymer remaining in the porous hollow fiber membrane precursor to thereby obtain the porous hollow fiber membrane.

Drying step: a step of drying the porous hollow fiber membrane.

Defect inspection step: a step of inspecting a defect of the porous hollow fiber membrane after the drying step by using the defect inspection method.

### (Coagulation Step)

First, a membrane forming material liquid containing a hydrophobic polymer, a hydrophilic polymer, and a solvent is prepared. Next, a porous hollow fiber membrane is formed by, for example, injecting the membrane forming material liquid into the coagulation liquid using a spinning nozzle with a round injection opening and then coagulating the material liquid in the coagulation liquid.

As the coagulation liquid disperses in the membrane forming material liquid, the hydrophobic polymer is coagulated and the hydrophobic polymer and the hydrophilic polymer undergo phase separation. As the phase separation and the coagulation proceed simultaneously, a porous hollow fiber membrane precursor having a three dimensional net-like structure in which the hydrophobic polymer and the hydrophilic polymer are alternately interlaced is obtained. In the porous hollow fiber membrane precursor, the hydrophilic polymer is supposed to interlace with the hydrophobic polymer in a three-dimensional way in a gel state. The porous hollow fiber membrane precursor is made into the porous hollow fiber membrane by removing the hydrophilic polymer in the removing step (described later) to thereby making pores at where the hydrophilic polymer has been removed.

In the coagulation step, either of: a dry-wet spinning method in which an idle running area is provided between the spinning nozzle injecting the membrane forming material liquid and the coagulation liquid; and a dry spinning method in which the membrane forming material liquid is directly injected from the spinning nozzle into the coagulation liquid, without an idle running area, can be employed.

As the hydrophilic polymer, any polymer that can form the porous hollow fiber membrane precursor in the coagulation step can be used without limitation. As the hydrophobic polymer: a polysulfone-based resin such as polysulfone and polyether sulfone; a fluorine-based resin such as polyvinylidene fluoride; polyacrylonitrile, cellulose derivatives, polyamide, polyester, polymethacrylate, polyacrylate and the like can be exemplified. Copolymer of the abovementioned resins, as well as these resins and the copolymer with a substituent introduced thereto can also be used as the hydrophobic polymer. In addition, a blend of polymers of the same kind having different molecular weights or the like, and a blend of resins of two or more different kinds can also be used as the hydrophobic polymer.

The fluorine-based resins, particularly copolymer of: at least one of polyvinylidene fluoride and vinylidene fluoride; and monomer other than polyvinylidene fluoride and vinylidene fluoride, is superior in resistance to an oxidizing agent such as hypochlorous acid. Given this, in a case of obtaining a porous hollow fiber membrane by treating the porous hollow fiber membrane precursor with an oxidizing agent in the removing step (described later) and the like, it is preferable to select the fluorine-based resin as the hydrophobic polymer.

The hydrophilic polymer is used for controlling the viscosity of the membrane forming material liquid to be within a range suitable for forming the porous hollow fiber membrane precursor, to thereby stabilize a state of membrane formation. As the hydrophilic polymer, polyethylene glycol and polyvinyl pyrrolidone are preferably used. Particularly, copolymer of: at least one of polyethylene glycol and polyvinyl pyrrolidone; and monomer other than polyethylene glycol and polyvinyl pyrrolidone, is preferably used from a viewpoint of pore diameter control of the porous hollow fiber membrane and strength of the porous hollow fiber membrane.

As the hydrophilic polymer, a blend of resins of two or more kinds can also be used. Hydrophilic polymer of a higher molecular weight facilitates formation of a porous hollow fiber membrane having a superior membrane structure. Meanwhile, hydrophilic polymer of a lower molecular weight facilitates removal of the hydrophilic polymer from the porous hollow fiber membrane precursor in the removing step (described later). Given this, a blend of hydrophilic polymers of the same kind having different molecular weights can be used as appropriate.

By blending the above described hydrophobic polymer and hydrophilic polymer into a solvent that dissolves these polymers (good solvent), the membrane forming material liquid can be prepared.

A type of the solvent is not particularly limited; however, in a case of performing the coagulation step in the dry-wet spinning method, it is preferable to select a solvent that is easily blended uniformly with water since the pore diameter of the porous hollow fiber membrane is controlled by causing the membrane forming material liquid to absorb moisture in the idle running area. As the solvent, N,N-dimethylformamide, N,N-dimethylacetamide, dimethyl sulfoxide, N-methyl-2-pyrrolidone, N-methylmorpholine-N-oxide and the like can be exemplified. The solvent can be used singly or in combination of two or more kinds. Furthermore, in a range where solubility of the hydrophobic polymer and the hydrophilic polymer in the solvent is not impaired, a poor solvent of the hydrophobic polymer and the hydrophilic polymer may be combined for use.

Other additives can be added to the membrane forming material liquid as necessary.

The temperature of the membrane forming material liquid is not particularly limited and preferably 20 to 40°C.

If the concentration of the hydrophobic polymer in the membrane forming material liquid is too thin or thick, there is a tendency that stability in membrane formation is reduced to make it difficult to form a preferable porous hollow fiber membrane structure. Thus, the lower limit of the concentration is preferably 10 mass %, and more preferably 15 mass %. The upper limit thereof is preferably 30 mass %, and more preferably 25 mass %.

On the other hand, the lower limit of the concentration of the hydrophilic polymer is preferably 1 mass % so as to easily form the porous hollow fiber membrane, and more preferably 5 mass %. The upper limit of the concentration of the hydrophilic polymer is preferably 20 mass % in terms of operability of the membrane forming material liquid, and more preferably 12 mass %.

The coagulating liquid should be a non-solvent of the hydrophobic polymer and a good solvent of the hydrophilic polymer. More specifically, water, ethanol, methanol or the like, and a mixture thereof can be exemplified as the coagulating liquid. Particularly, a liquid mixture of the solvent used in the membrane forming material liquid and water is preferable in view of safety and operational management.

As the spinning nozzle, an annular nozzle corresponding to a desired configuration of a porous hollow fiber membrane can be selected. For example, in order to obtain a porous hollow fiber membrane of superior strength, a spinning nozzle having an annular passage that injects the membrane forming material liquid on the outside of a support passage that lets a hollow reinforcing support body therethrough can be employed. A porous hollow fiber membrane with the hollow reinforcing support body inside a porous layer formed of the hydrophobic polymer can thus be obtained. As the hollow reinforcing support body, a hollow knitted or braided string made of various kinds of fiber can be exemplified. For the hollow knitted or braided string, various materials can be used singly or in combination. As fiber used for the hollow knitted or braided string, synthetic fiber, semisynthetic fiber, recycled fiber, natural fiber and the like can be exemplified. A form of fiber used for the hollow knitted or braided string can be either of monofilament, multifilament, and spun yarn. In a case of using the hollow reinforcing support body, the membrane forming material liquid discharged from the spinning nozzle can be applied to a surface of the reinforcing support body passing through the spinning nozzle, and injected into the coagulating liquid. Alternatively, using an annular composite spinning nozzle, the membrane forming material liquid can be applied to a surface of the reinforcing support body inside the nozzle, and then directly injected into the coagulating liquid.

### (Removing Step)

In the removing step, for example, the hydrophilic polymer is subjected to oxidative decomposition by means of the oxidizing agent and then the hydrophilic polymer of a reduced molecular weight is removed. By removing the hydrophilic polymer remaining in the porous hollow fiber membrane precursor, the porous hollow fiber membrane is obtained.

As a method of reducing the molecular weight of the hydrophilic polymer in the porous hollow fiber membrane precursor, a method of immersing the porous hollow fiber membrane precursor in a chemical containing the oxidizing agent that is to be absorbed, and then heating the porous hollow fiber membrane precursor absorbed with the chemical in the gas phase is preferable.

As the oxidizing agent, ozone, hydrogen peroxide, permanganate, bichromate, persulfate and the like can be used. Among these, hypochlorite is particularly preferable as the oxidizing agent, in terms of oxidative power, decomposition performance of the hydrophilic polymer, operability, cost, and the like. As hypochlorite, sodium hypochlorite, calcium hypochlorite and the like can be exemplified. Among these, sodium hypochlorite is particularly preferable as hypochlorite.

The temperature of the chemical is preferably no higher than 50°C and more preferably no higher than 30°C. If the temperature is higher than 50°C, the hydrophilic polymer dropped in the chemical during immersion of the porous hollow fiber membrane precursor is further subject to oxidative decomposition, leading to wasting of the oxidizing agent. The temperature of the chemical is preferably no lower than 0°C and more preferably no lower than 10°C. The temperature no lower than 0°C allows efficient oxidative decomposition of the hydrophilic polymer and can suppress cost for temperature control at a low temperature.

After the chemical is retained in the porous hollow fiber membrane precursor, it is preferable that the porous hollow fiber membrane precursor is heated in the vapor phase to thereby oxidize and decompose the hydrophilic polymer. By heating the porous hollow fiber membrane precursor in the vapor phase, there is little possibility that the chemical retained in the porous hollow fiber membrane is excessively diluted or is eluted or dropped in a heating medium. As a result, the oxidizing agent in the chemical is efficiently used for decomposition of the hydrophilic polymer remaining in the porous hollow fiber membrane precursor.

As a specific heating method, it is preferable to heat the porous hollow fiber membrane precursor using a heating fluid under atmospheric pressure. It is preferable to use a fluid with high relative humidity as the heating fluid, for preventing drying of the oxidizing agent and achieving efficient decomposition. In other words, it is preferable to heat the porous hollow fiber membrane precursor retaining the chemical under a heat and humidity condition. The relative humidity is preferably 80%, more preferably 90%, and most preferably about 100%.

The lower limit of the heating temperature is preferably 50°C because it is possible to reduce the processing time in a case where a continuous processing is performed, and is more preferably 80°C. The upper limit of the temperature is preferably 100°C in atmospheric pressure.

As a method for removing the hydrophilic polymer of which the molecular weight from the porous hollow fiber membrane precursor, it is preferable to wash the porous hollow fiber membrane precursor. A washing method is not particularly limited, and may be a method of making the porous hollow fiber membrane precursor travel in a washing tank filled with washing liquid, or a method of immersing the porous hollow fiber membrane precursor in the washing liquid.

As the washing liquid, water, a mixed solution of water and the solvent used in the membrane forming material liquid, and the like can be exemplified.

The temperature of the washing liquid is not particularly limited and preferably 30 to 80°C. The washing liquid at temperature at least 30°C facilitates dispersion and dissolution of the hydrophilic polymer in the washing liquid. The washing liquid at temperature no higher than 80°C facilitates attaining a high degree of decompression and withdrawal of moisture from the porous hollow fiber membrane after washing. The temperature higher than 80°C promotes evaporation of the washing liquid, making it difficult to handle.

### (Drying Step)

The porous hollow fiber membrane obtained by removing the hydrophilic polymer is dried.

A method of the drying the porous hollow fiber membrane is not particularly limited, and a method of introducing the porous hollow fiber membrane to a dryer such as a hot air dryer may be used.

### (Defect Inspection Step)

The porous hollow fiber membrane after the drying step is inspected for a defect by using the defect inspection method for a porous hollow fiber membrane as described above.

By performing the defect inspection step after the drying step, all porous hollow fiber membranes in the course of manufacture can be inspected for a defect in-line, improving an yield rate.

In a case in which a defect is found in the porous hollow fiber membrane in the defect inspection step, it is preferable to leave a marking or the like at a defective part. This facilitates removal of the defective part upon an assembly processing of an element using the porous hollow fiber membrane thus obtained, for preventing the defective part of the porous hollow fiber membrane from being incorporated in the element, to thereby improve the yield rate.

### Porous Hollow Fiber Membrane

The porous hollow fiber membrane of the present invention is manufactured by using the manufacturing method of a porous hollow fiber membrane of the present invention described above. The porous hollow fiber membrane of the present invention has been easily and efficiently tested for a defect, and can preferably be employed in various field such as water treatment.

### Example 1

The present invention is described in detail hereinafter by way of Examples; however, the present invention is not limited to the following description.

### (Porous Hollow Fiber Membrane)

A porous hollow fiber membrane having a structure in which a hollow string of polyester fiber of approximately 2.5 mm in outside diameter and approximately 1.5 mm in inside diameter is covered with a porous layer of polyvinylidene fluoride resin of 0.15 mm in thickness was used in a moist state, in such a way that the porous hollow fiber membrane that had been wound around a bobbin after being dried was unwound from the bobbin, hydrophilized, and checked for a position of a defect in advance by the hollow part pressurization defect inspection method (described later).

### (Hydrophilization Treatment)

The dried porous hollow fiber membrane was hydrophilized by immersing in a 0.3 mass % aqueous solution of a hydrophilization agent (Olfine EXP4036, manufactured by Nissin Chemical Co., Ltd.) (hereinafter referred to as "hydrophilization liquid") for 30 minutes to sufficiently impregnate the porous layer with the hydrophilization liquid. And then, the porous hollow fiber membrane was removed from the hydrophilization liquid, the hydrophilization liquid in the hollow part was sufficiently discharged, and the porous hollow fiber membrane was washed under running water (pure water at room temperature) a for 30 minutes, to thereby replace the hydrophilization liquid in the porous layer with pure water.

### (Hollow Part Pressurization Defect Inspection Method)

Approximately 30 m of the hydrophilized porous hollow fiber membrane was spread in a water tank of 2000 mm in length, 300 mm in width, and 150 mm in depth containing pure water of 500 mm in depth while avoiding overlap of the porous hollow fiber membrane, a pressurization nozzle was attached to the hollow part at both ends of the porous hollow fiber membrane, and compressed air of which pressure was controlled to be 80 kPa by a precision pressure reduction valve was supplied thereto.

In the entire length of the porous hollow fiber membrane, a defective part generating an air bubble from a surface thereof was identified by sinking the hydrophilized porous hollow fiber membrane below the water surface by 300 mm from one end toward the other end, and marking the defective part generating an air bubble with a red string attached thereto. Thereafter, pressurization of the hollow part was stopped, pressure was released, and the pressurization nozzle was removed.

After marking a position 5 m away from the one end of the porous hollow fiber membrane with black pigmented ink, a distance between the marked position and the red string was recorded. The porous hollow fiber membrane after the hollow part pressurization defect inspection was wound around a bobbin from an end opposite to the marked end and covered, along with the bobbin, by a polyethylene bag in order to prevent drying.

### (Defect Inspection Apparatus)

For the continuous defect inspection of the porous hollow fiber membrane, as illustrated in FIG. 15, an apparatus configured to include: a feeding device 70 that can apply back tension to the bobbin by means of a torque motor; the defect inspection apparatus 1; and a Nelson roller type winding device 80 was used.

### (Passage Member 20)

As the passage member 20 through which the porous hollow fiber membrane passes, a member configured such that, as exemplified by FIGS. 2 to 4, 6 and 7: a groove forming the hollow fiber membrane travel passage 21 having the enlarged space 22 is provided on the passage member main body 20a; the upper lid 20b closes the structure; a cross-sectional shape vertical to the central axis of the hollow fiber membrane travel passage 21 of the is a square; and the interface of the upper lid 20b with respect to the passage member main body 20a is flat, was used. In addition, the pressure gauge 68 provided on a downstream side of the branch passage monitored the degree of decompression of the fluid L.

Measurement of each part of the passage member 20 and specifications of each constituent device of the defect inspection apparatus are shown in Tables 1 and 2.

**[Table 1]**

| | |
|---|---|
| PASSAGE MEMBER LENGTH D | 450mm |
| PASSAGE MEMBER WIDTH | 30mm |
| HOLLOW FIBER MEMBRANE TRAVEL PASSAGE LENGTH d₁ | 3.5mm |
| CROSS-SECTIONAL SHAPE OF HOLLOW FIBER MEMBRANE TRAVEL PASSAGE | SQUARE |
| ENLARGED SPACE LENGTH f | 20mm |
| ENLARGED SPACE WIDTH w₁ | 8mm |
| EBLARGED SPACE HEIGHT h | 16mm |
| CROSS-SECTIONAL SHAPE OF BRANCH PASSAGE | ROUND |
| BRANCH PASSAGE DIAMETER | 10mm |
| PASSAGE MEMBER MATERIAL | SUS304 |
| LID SIZE | LENGTH 450 mm × WIDTH 30 mm × THICKNESS 10 mm |
| LID MATERIAL | TRANSPARENT POLYMETHYL METHACRYLATE |

**[Table 2]**

| | |
|---|---|
| CONTAINER 10 | LENGTH 800 mm × WIDTH 400 mm × DEPTH 200 mm: MATERIAL SUS304 |
| SUCTION PUMP (FLUID SUCTION MEANS 40) | IWAKI CO., LTD. / MAGNET GEAR PUMP MDG-R15K200 |
| PHOTOELECTRIC SENSOR(LIGHT RECEIVING UNIT 52) | OMRON CORPORATION / AMPLIFIER FOR FIBER SENSOR E3X-DA11AN |
| OPTICAL FIBER (LIGHT EMITTING UNIT 51) | OMRON CORPORATION / FIBER UNIT LIGHT ANGLE TYPE E32-T11N |
| DEAERATION MEANS 65 | MISTUBISHI RAYON CO., LTD. / STERAPOA KMF011HZ5 |
| DEFOAMING MEANS 64, 67 | ADVANTEC/HOUSING: 1PA |
| | FILTERING MODULE:TCFH-010-S1FE |
| PRESSURE GAUGE 68 | SMC CORPORATION / HIGH PRECISION DIGITAL PRESSURE SWITCH:ZSE30 |
| DECOMPRESSION MEANS 66 | NIHON PISCO CO., LTD / VACUUM GENERATOR VCH15-038CJ |
| DATA LOGGER | KEYENCE CORPORATION / NR-2000 |
| INVERTER | MITSUBISHI ELECTRIC CORPORATION / FR-S520E-0.4 |

The porous hollow fiber membrane M after the hollow part pressurization defect inspection was pulled out while applying a constant tension from the marked end, caused to pass through the passage member 20 via the guide rollers 31, 32, and then the guide rollers 33, 34; and stopped after being wound 5 times around the winding device 80 in a crossed manner.

Pure water of approximately 20°C was supplied to the defoaming means 64 at a rate of approximately 1L/min and pure water including air bubbles was discharged from an air vent port of the defoaming means 64 at a rate of approximately 0.1L/min. The pure water discharged from the defoaming means 64 was supplied to the deaeration means 65, and maintained at approximately -92 kPa by the decompression means 66 connected to the air inlet port of the deaeration means 65. The fluid L was defoamed and deaerated by the defoaming means 64 and the deaeration means 65, and pure water thus obtained was supplied to the container 10.

A position of an overflow part was adjusted such that a distance between the upper lid of the passage member 20 and the fluid level in the container is approximately 50 mm. The fluid suction means 40 was activated in a state in which the porous hollow fiber membrane is present in the passage member 20, and the rotation speed of the fluid suction means 40 was controlled by an inverter such that the pressure indicated by the pressure gauge 68 is approximately -80 ± 2 kPa. The amount suctioned by the pump was approximately 4.2 L/min. Pure water including air bubbles was discharged from an air vent port of the defoaming means 67 provided in the fluid circulation line 63 at a rate of approximately 0.1L/min, to thereby remove air bubbles and foreign matters in the circulating pure water in the container 10. And then, the AC servo driven winding device 80, which had been halted in a state in which the porous hollow fiber membrane was wound, was activated to cause the porous hollow fiber membrane to pass through the passage member 20 at a rate of 20 m/min, to thereby perform the continuous defect inspection of the porous hollow fiber membrane.

Recording of a voltage signal from an amplifier of a photoelectric sensor by a data logger was started immediately after activating the winding device 80, and a time period between the start of recording and a moment at which the position of the membrane marked with the black pigmented ink has passed through a central part of the passage member 20 was recorded.

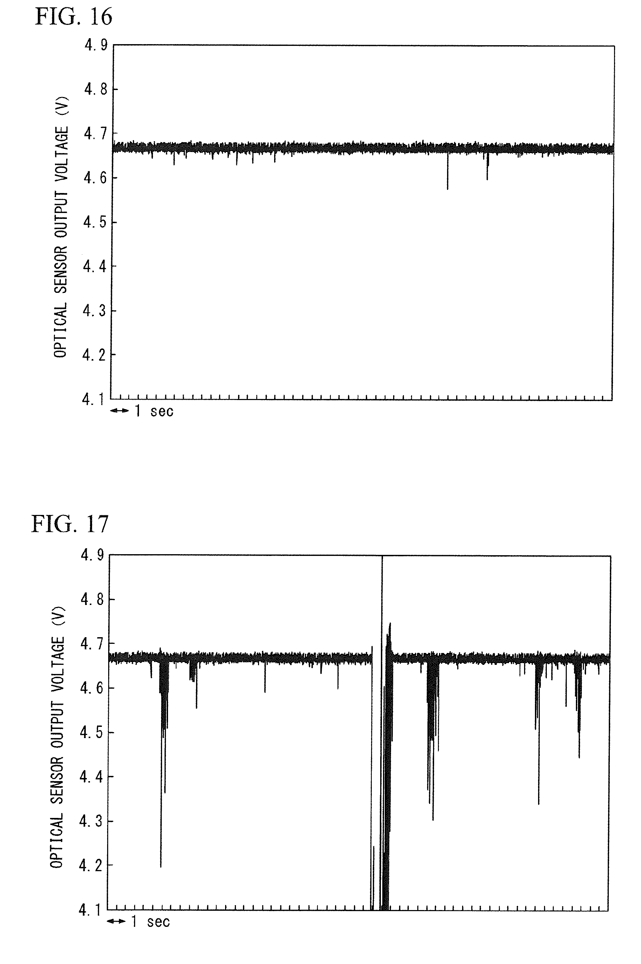

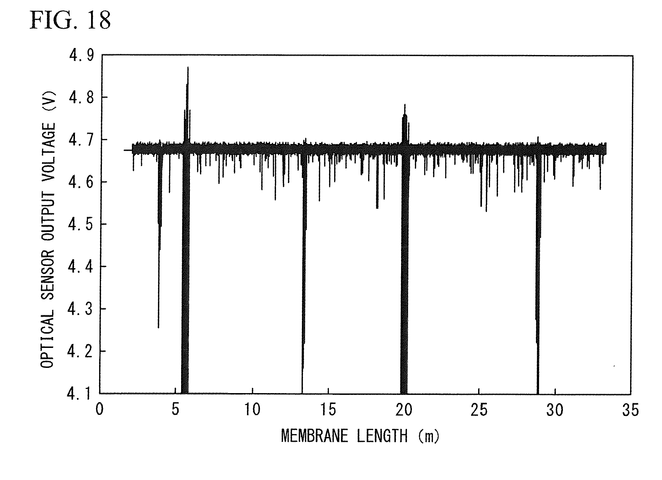

A recorded result by the data logger for a part of the porous hollow fiber membrane without a defect is shown in FIG. 16 as a graph with the elapsed time on the abscissa and the output voltage on the ordinate. A recorded result by the data logger for a part of the porous hollow fiber membrane with a defect is shown in FIG. 17 as a graph with the elapsed time on the abscissa and the output voltage on the ordinate. A recorded result by the data logger for a part of the porous hollow fiber membrane having passed through the passage member 20 is shown in FIG. 18 as a graph with the elapsed time on the abscissa and the output voltage on the ordinate.

A comparison between: a position of the defect from the marked position identified by the hollow part pressurization defect inspection method; and a position of the defect from the marked position calculated based on the measurement result of the continuous defect inspection shown in FIG. 18 and the membrane travel speed is shown in Table 3.

**[Table 3]**

| INSPECTION METHOD | POSITION OF DEFECT: DISTANCE FROM MARKING [m] | | | | | | |
|---|---|---|---|---|---|---|---|
| HOLLOW PART PRESSURIZATION DEFECT INSPECTION METHOD | - | - | 13.0 | - | 23.7 | 29.2 | 29.2 |
| Example 1 CONTINUOUS DEFECT INSPECTION | 4.3 | 5.6 | 13.6 | 20.3 | 24.0 | 29.7 | 29.7 |
| HOLLOW PART PRESSURIZATION DEFECT INSPECTION METHOD (REPEATED) | AIR BUBBLE DETECTION | AIR BUBBLE DETECTION | AIR BUBBLE DETECTION | AIR BUBBLE DETECTION | AIR BUBBLE DETECTION | AIR BUBBLE DETECTION | AIR BUBBLE DETECTION |
| NOTE | NEW DEFECT | NEW DEFECT | - | NEW DEFECT | - | - | - |

As shown in Table 3, all the defects identified by the hollow part pressurization defect inspection method were detected by the continuous defect inspection of Example 1; and positions of the defects from the marked position were almost identical.

In addition, in the measurement of the continuous defect inspection of Example 1, a new defect that had not been identified by the hollow part pressurization defect inspection method was detected. As a result of performing the hollow part pressurization defect inspection again on the porous hollow fiber membrane after the continuous defect inspection of Example 1, a defect generating an air bubble was found at a position newly found in the continuous defect inspection of Example 1, and the defect was confirmed to be a damage caused during handling of the porous hollow fiber membrane after the hollow part pressurization defect inspection.

### INDUSTRIAL APPLICABILITY

The defect inspection apparatus and the defect inspection method according to the present invention allow easy and efficient inspection of a defect of a porous hollow fiber membrane, not requiring a complex hermetic structure, and are preferably employed for defect inspection of various porous hollow fiber membrane used for water treatment and the like.

### EXPLANATION OF REFERENCE NUMERALS

1-3 Defect inspection apparatus for porous hollow fiber membrane
10, 10A, 10B Container
20, 20A-20D Passage member
21, 21A Hollow fiber membrane travel passage
22 Enlarged space
23, 23A Branch passage
30 Restriction means
31-34 Guide rollers
40 Fluid suction means
50 Air bubble detection means
51 Light emitting unit
52 Light receiving unit
60 Fluid inflow line
61 Fluid supply line
62 Fluid discharging line
63 Fluid circulation line
64, 67 Defoaming means
65 Deaeration means
66 Decompression means
68 Pressure gauge
70 Supply device
80 Winding device
D Length of hollow fiber membrane travel passage
d₁ Cross-sectional width of hollow fiber membrane travel passage
d₂ Cross-sectional height of hollow fiber membrane travel passage
d₃ Distance of gap of hollow fiber membrane travel passage
w₁ Width of enlarged space
f Length of enlarged space
h Height of enlarged space

## Claims

1. A defect inspection method for a porous hollow fiber membrane, comprising steps of: disposing, in a fluid, openings at both ends of a hollow fiber membrane travel passage, which allows the porous hollow fiber membrane to pass therethrough, of a passage member, which is formed such that the hollow fiber membrane travel passage penetrates thereinside, to thereby fill the passage with the fluid;
causing the porous hollow fiber membrane to travel continuously through the fluid in the hollow fiber membrane travel passage;
lowering pressure of the fluid in the hollow fiber membrane travel passage by flowing the fluid in the hollow fiber membrane travel passage; and
detecting an air bubble released into the fluid from a defect of the porous hollow fiber membrane.

2. The defect inspection method for a porous hollow fiber membrane according to claim 1, comprising steps of: disposing, in the fluid, openings at both ends of the hollow fiber membrane travel passage of the passage member, which further includes a branch passage that is formed to branch off from the hollow fiber membrane travel passage and to communicate with a first wall surface, to thereby fill the passage with the fluid; and
lowering the pressure of the fluid in the hollow fiber membrane travel passage by flowing the fluid in the hollow fiber membrane travel passage through the branch passage.

3. The defect inspection method for a porous hollow fiber membrane according to claim 2, wherein: an enlarged space in which a width of the passage increases is provided at a part in which the branch passage branches off from the hollow fiber membrane travel passage; and
the pressure of the fluid in the hollow fiber membrane travel passage is lowered by flowing the fluid in the hollow fiber membrane travel passage from the enlarged space through the branch passage.

4. The defect inspection method for a porous hollow fiber membrane according to any one of claims 1 to 3, wherein the air bubble is guided to an air bubble detection means by flowing the air bubble along with the fluid.

5. The defect inspection method for a porous hollow fiber membrane according to any one of claims 1 to 4, wherein the fluid that fills the passage is fed after removing a bubble and dissolved gas in the fluid.

6. The defect inspection method for a porous hollow fiber membrane according to any one of claims 1 to 5, wherein the air bubble is detected in the fluid that is suctioned and flows from the hollow fiber membrane travel passage.

7. A defect inspection apparatus for a porous hollow fiber membrane comprising: a container storing a fluid;
a passage member that is configured such that a hollow fiber membrane travel passage, which allows the porous hollow fiber membrane to pass therethrough continuously, penetrates thereinside and that openings at both ends of the hollow fiber membrane travel passage are disposed in the fluid to thereby fill the passage with the fluid;
a restriction means that restricts travel of the porous hollow fiber membrane such that the porous hollow fiber membrane passes through the fluid in the hollow fiber membrane travel passage of the passage member;
a fluid suction means that flows the fluid in the hollow fiber membrane travel passage of the passage member to thereby lower the pressure of the fluid in the hollow fiber membrane travel passage; and
an air bubble detection means that detects an air bubble that is released into the fluid from a defect of the porous hollow fiber membrane.

8. The defect inspection apparatus for a porous hollow fiber membrane according to claim 7, wherein: in the passage member, a branch passage is further formed to branch off from the hollow fiber membrane travel passage and to communicate with a first wall surface, and openings at both ends of the hollow fiber membrane travel passage are disposed in the fluid to thereby fill the passage with the fluid; and
the pressure of the fluid in the hollow fiber membrane travel passage is lowered by flowing the fluid in the hollow fiber membrane travel passage of the passage member through the branch passage.

9. The defect inspection apparatus for a porous hollow fiber membrane according to claim 8, wherein: an enlarged space in which a width of the passage increases is provided at a part in which the branch passage branches off from the hollow fiber membrane travel passage of the passage member; and
the pressure of the fluid in the hollow fiber membrane travel passage is lowered by flowing the fluid in the hollow fiber membrane travel passage of the passage member from the enlarged space through the branch passage by means of the fluid suction means.

10. The defect inspection apparatus for a porous hollow fiber membrane according to any one of claims 7 to 9, wherein the air bubble is guided to an air bubble detection means along with the fluid flowing.

11. The defect inspection apparatus for a porous hollow fiber membrane according to any one of claims 7 to 10, wherein the air bubble detection means is disposed between the hollow fiber membrane travel passage and the fluid suction means.

12. The defect inspection apparatus for a porous hollow fiber membrane according to any one of claims 7 to 11, wherein the air bubble detection means includes a light emitting unit that emits detection light into the fluid and a light receiving unit that receives the detection light having passed through the fluid.

13. The defect inspection apparatus for a porous hollow fiber membrane according to claim 12, wherein the light emitting unit and the light receiving unit are arranged to face each other.

14. The defect inspection apparatus for a porous hollow fiber membrane according to claim 12 or 13, wherein the light emitting unit and the light receiving unit are arranged such that tip portions thereof are positioned inside the fluid that is suctioned and flows from the hollow fiber membrane travel passage.

15. The defect inspection apparatus for a porous hollow fiber membrane according to any one of claims 7 to 14, further comprising a fluid inflow line through which the fluid flows into the container,
wherein a defoaming means that removes a bubble in the fluid inflowing is provided in the fluid inflow line.

16. The defect inspection apparatus for a porous hollow fiber membrane according to claim 15, wherein a deaeration means that removes dissolved gas in the fluid inflowing is provided in the fluid inflow line.

17. The defect inspection apparatus for a porous hollow fiber membrane according to claim 15 or 16, wherein the fluid inflow line includes a fluid feed line through which the fluid inflows from a fluid feed source to the container.

18. The defect inspection apparatus for a porous hollow fiber membrane according to any one of claims 15 to 17, wherein the fluid inflow line includes a fluid circulation line in which the fluid suctioned from the passage member flows into the container and is circulated.

19. A manufacturing method of a porous hollow fiber membrane comprising: a coagulation step of coagulating a membrane forming material liquid containing a hydrophobic polymer, a hydrophilic polymer, and a solvent by a coagulation liquid, to thereby forming a porous hollow fiber membrane precursor;
a cleaning step of cleaning the porous hollow fiber membrane precursor to thereby remove the solvent remaining in the porous hollow fiber membrane precursor;
a removing step of removing the hydrophilic polymer remaining in the porous hollow fiber membrane precursor to thereby obtain the porous hollow fiber membrane;
a drying step of drying the porous hollow fiber membrane; and
a defect inspection step of inspecting the porous hollow fiber membrane for a defect after the drying step by using the defect inspection method according to any one of claims 1 to 6.

20. A porous hollow fiber membrane, wherein the porous hollow fiber membrane is manufactured by a manufacturing method of a porous hollow fiber membrane including: a coagulation step of coagulating a membrane forming material liquid containing a hydrophobic polymer, a hydrophilic polymer, and a solvent by a coagulation liquid, to thereby forming a porous hollow fiber membrane precursor;
a cleaning step of cleaning the porous hollow fiber membrane precursor to thereby remove the solvent remaining in the porous hollow fiber membrane precursor;
a removing step of removing the hydrophilic polymer remaining in the porous hollow fiber membrane precursor to thereby obtain the porous hollow fiber membrane;
a drying step of drying the porous hollow fiber membrane; and
a defect inspection step of inspecting the porous hollow fiber membrane for a defect after the drying step by using the defect inspection method according to any one of claims 1 to 6.
